(19)

**Europäisches Patentamt**

**European Patent Office**

**Office européen des brevets**

(11) **EP 4 575 919 A1**

(12) **EUROPEAN PATENT APPLICATION**

(43) Date of publication:
25.06.2025 Bulletin 2025/26

(21) Application number: 23220077.4

(22) Date of filing: 22.12.2023

(51) International Patent Classification (IPC):
**G06N 10/20** (2022.01)  **G06N 10/60** (2022.01)
**G06N 10/40** (2022.01)

(52) Cooperative Patent Classification (CPC):
**G06N 10/60; G06N 10/20;** G06N 10/40

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**KH MA MD TN**<br><br>(71) Applicant: **Pasqal Netherlands B.V.**<br>**1076 ED Amsterdam (NL)** | (72) Inventors:<br>• **Abramavicius, Vytautas**<br>  **1076 ED Amsterdam (NL)**<br>• **Philip, Evan John**<br>  **1076 ED Amsterdam (NL)**<br>• **Umeano, Chukwudubem Chijioke**<br>  **1076 ED Amsterdam (NL)**<br><br>(74) Representative: **De Vries & Metman**<br>  **Overschiestraat 180**<br>  **1062 XK Amsterdam (NL)** |

(54) **DERIVATIVE QUANTUM CIRCUITS**

(57) Method and systems are disclosed for computing a derivative of a quantum circuit using a hybrid quantum computing system. The method comprises receiving or determining a formulation of a parametrized quantum circuit parametrized by a continuous variable. The quantum circuit may encode a given parameter value of the continuous variable in a Hilbert space associated with a quantum elements of the quantum computer. The method further comprises determining or receiving a number of one or more distinct gap values and an equal number of distinct parameter shifts. The number of gap values is lower than the number of spectral gaps of a generator of the quantum circuit. The method further comprises executing, for each of the distinct parameter shifts, the parametrized quantum circuit with the continuous variable x increased by the respective parameter shift and with the continuous variable x decreased by the respective parameter shift. The execution of the parametrized quantum circuit comprises translating the parametrized quantum circuit into control signals for controlling the plurality of quantum elements and for readout of the plurality of quantum elements to obtain hardware measurement data; controlling the quantum computer system based on the control signals; and receiving, in response to the execution of the quantum circuit, the hardware measurement data. The method further comprises processing the hardware measurement data to obtain the derivative of the quantum circuit with respect to the given parameter.

Fig. 2

EP 4 575 919 A1

**Description**

<u>Technical field</u>

This disclosure relates to derivative quantum circuits, and in particular, though not exclusively, to methods and systems for determining and executing derivative quantum circuits, and to a computer program product enabling a hybrid classical quantum computer system to perform such methods.

<u>Background</u>

Quantum computing is a burgeoning field with promises of implementing algorithms for certain problems with a speed-up over their classical counterpart - known as quantum advantage. These speed-ups come from properties unique to quantum computers - such as superposition, entanglement, and an exponentially scaling computational space - which lead to a fundamentally different way of computation. Fields which are promising for quantum advantage to be found include fields in which quantum-mechanical phenomena play a roll, such as certain chemistry applications and molecular simulations. Other examples are provided by fields with (computationally) large problems, such as generative modelling and many differential equations.

Differential equations form the basis of modelling a great number of systems, such as electromagnetic waves, evolution of heat distributions, population dynamics, optimisation of industrial processes, and time-evolution of probability distributions. Consequently, there has been much recent interest on biasing neural networks towards differential equation solutions. A common means of representing differential equations in neural networks is using Physics-Informed Neural Networks (PINNs), which use (potentially higher-order) derivatives of neural networks outputs with respect to their inputs to construct appropriate regularisation terms towards a prescribed differential equation.

Calculation of the derivative of the output of a quantum circuit with respect to variable circuit parameters (input or variational parameters) is essential to implement a large class of quantum algorithms, notably quantum machine learning algorithms like Derivative Quantum Circuits (DQC) and Quantum Extremal Learning (QEL). Analytical differentiation methods like automatic differentiation are frequently favoured over numerical differentiation methods like finite difference method even in classical machine learning due to their robustness against errors.

To solve differential equations or to perform gradient-descent-based optimization, it is essential to have access to the derivatives of quantum computations. Two techniques are widely used in the art: finite differencing and analytic differentiation.

Finite-difference based methods compute a derivative $f'$ of a function $f$ at a point $x$ with some variation on

$$f'(x) \approx \frac{f(x+\Delta x) - f(x)}{\Delta x}$$

, where $\Delta x$ is the finite difference. This expression is exact in the limit that the difference $\Delta x$ goes to zero. Finite differencing is typically used in grid-based implementations, where $\Delta x$ is the grid step. Hence, numerical differentiation techniques require small difference $\Delta x$ to reduce the so-called bias error or discretisation error, leading to a prohibitively large computational cost. However, using current or near-term hardware, it is difficult to accurately implement small parameter shifts, i.e., to accurately input $\Delta x$.

Finite difference methods may also be used in grid-based methods, where the gird provides a natural step size. In such implementations, the computation of $f_{i+1} - f_i$, where i denotes a grid index, requires so-called shifter circuits to compare the function values in adjacent grid cells. However, current hardware implementations of these shifter circuits are extremely noisy; that is, the resulting error in $f_{i+1} - f_i$ is much larger than the uncertainty in $f_i$.

Moreover, quantum measurements are inherently probabilistic, leading to an uncertainty in the determined function values $f(x + \Delta x)$ and $f(x)$. For small differences, these uncertainties are divided by a small number (the step size), and thus blow up. Consequently, there is an intrinsic limit on the accuracy of derivatives using finite difference methods for quantum computers. These uncertainties are often neglected in simulations of quantum circuits, but are a severe problem in actual hardware implementations.

Thus, in general, a value for $\Delta x$ that is too large will result in a large bias error, and a value of $\Delta x$ that is too small will result in a large variational error and in errors in $\Delta x$.

By contrast, analytic differentiation is, in theory, exact in the sense that the bias error is 0. The most common way to implement analytic differentiation is by use of the so-called Parameter Shift Rule (PSR), or the Generalised Parameter Shift Rule (GPSR) as described in Kyriienko et al., 'Generalized quantum circuit differentiation rules', Phys. Rev. A 104 (052417). These use typically fairly large parameter shifts, so that the variational error is relatively small (but still non-zero), and so that (hardware) errors in the exact parameter values have a limited effect.

However, the (normal) parameter shift rule is only applicable to certain quantum circuits, implemented on non-interacting hardware where the parameters control single-qubit gates. The parameter shift rule cannot be used for interacting systems, such as a neutral atom quantum computer and many other current hardware implementations.

The (generalised) parameter shift rule can, in principle, handle any quantum circuit, but may result in a very large number of circuit repetitions; typically at least two for every encoding qubit, more for more expressive feature maps. In theory, for a system with $N$ qubits, this can require $2^{2N}$ circuit evaluations (not even counting the number of shots for each circuit to reduce the variance). This limits their practical application on current hardware.

The output in quantum machine learning, even in case of completely ideal hardware, would contain the fundamental shot noise. This, combined with the limited shot budget of near-term quantum hardware, make numerical differentiation error prone and unfeasible..

The generalized parameter shift rule provides a method to calculate the exact derivative with respect to parameters represented by an arbitrary generator with a rich spectrum of Eigenvalues while remaining robust against noise. However, the generator of a quantum circuit with N qubits will have $2^N$ eigenvalues, which corresponds to making measurements at $2^N(2^N - 1)$ different values of the parameter to estimate the derivative at any point. This quickly becomes prohibitively expensive. For example, even for a very small, five qubit circuit on neutral atom hardware, this corresponds to 992 measurements. Given a typical shot budget of about 1000 shots for a single simulation, this results in only a single measurement per measurement point, which is insufficient to determine the expectation value.

There is therefore a need in the art for a method for computing (including approximating) a derivative of a quantum circuit with a limited shot budget, in a system with a non-trivial spectrum of eigenvalues (more than two distinct Eigenvalues).

<u>Summary</u>

It is an aim of embodiments in this disclosure to provide a system and method for computing a derivative of a quantum circuit that avoids, or at least reduces the drawbacks of the prior art.

In an aspect, embodiments in this disclosure relate to a method for computing a derivative of a quantum circuit using a hybrid data processing system comprising a classical computer system and a quantum computer system, the quantum computer system comprising a plurality of quantum elements. The method comprises receiving or determining, by the classical computer system, a formulation of a parametrized quantum circuit parametrized by a continuous variable in a variable space. The quantum circuit may encode a given parameter value of the continuous variable in a Hilbert space associated with the plurality of quantum elements. The method further comprises determining or receiving, by the classical computer system, a number of one or more distinct gap values and a number of one or more distinct parameter shifts, the number of one or more distinct gap values may be smaller than a number of spectral gaps obtained from the Eigenvalue spectrum. The number of one or more distinct parameter shifts may be equal to the number of one or more distinct gap values. The method further comprises executing, by the classical computer system, for each of the one or more distinct parameter shifts, the parametrized quantum circuit with the continuous variable shifted based on the respective parameter shift, e.g., with the continuous variable increased by the respective parameter shift and with the continuous variable decreased by the respective parameter shift. The method further comprises processing hardware measurement data receiving from the quantum computer to obtain the derivative of the parametrized quantum circuit with respect to the given parameter.

In an embodiment, the execution of the parametrized quantum circuit comprises translating the parametrized quantum circuit into control signals for controlling the plurality of quantum elements and for readout of the plurality of quantum elements to obtain hardware measurement data; controlling the quantum computer system based on the control signals; and receiving, in response to the execution of the parametrized quantum circuit, the hardware measurement data.

As used in this application, the derivative may refer to an exact or to an approximated derivative.

As used herein, a spectral gap is defined as a positive difference between two Eigenvalues of a generator defining the dependence of the quantum circuit on the parameter. Thus, a generator with more than one distinct spectral gap may be alternatively defined as a generator with more than two distinct (possibly degenerate) Eigenvalues. As used herein, a generator is a Hermitian matrix that is related to a unitary operator describing a quantum circuit via an exponential mapping. In practice, the generator corresponds to the Hamiltonian of the system, at least up to a constant multiplicative factor (conventionally, the generator is defined as two times the Hamiltonian).

As used herein, a gap value is a mathematical parameter that is used in a way that is analogous to the use of spectral gaps in the (generalised) parameter shift rule. A gap value may be equal to a spectral gap of the generator of the quantum circuit under consideration, but this need not be the case.

This method allows to calculate the derivative for a parametrized quantum circuit which can be represented by a unitary operator $\hat{\mathcal{U}}(x) = \exp(-i\, x\, \hat{G}/2)$, where $\hat{G}$ is a Hermitian matrix referred to as the generator of the unitary operator. Generally, the gap values are at least informed by an Eigenvalue spectrum of the generator $\hat{G}$. The method strikes a balance between the bias error, variance, and number of circuit evaluations. This is achieved by using one or more parameter shifts that are based on the spectrum of the generator associated with the circuit.

In an embodiment, the method further comprises receiving or determining, by the classical computer system, spectral information describing the Eigenvalue spectrum. In such an embodiment, the one or more distinct gap values may be based on the spectral information.

The spectral information may comprise, e.g., an estimate for the largest spectral gap in the Eigenvalue spectrum, a statistical description of the Eigenvalue spectrum or of an approximation thereof, a description of a dominant structure of the Eigenvalue spectrum, a complete list or substantially complete list of all spectral gaps, et cetera. Additionally or alternatively, the spectral information may comprise information about the Eigenvalues from which properties of the Eigenvalue spectrum may be derivable, e.g., estimates (or exact values) of the smallest and largest Eigenvalues, a statistical distribution of the Eigenvalues, or a complete list of all Eigenvalues, et cetera.

The gap values may or may not coincide with one or more of the plurality of spectral gaps.

In an embodiment, the spectral information comprises at least one of: an exact and/or approximate value of largest spectral gap and, optionally, a smallest positive spectral gap, and/or a smallest and a largest Eigenvalue; a statistical representation of a distribution of positive spectral gaps; and a list of all positive spectral gaps.

It has been shown that good results may be obtained when selecting gap values from the range of spectral gaps of the generator. In general, the smallest spectral gap may be assumed to be close to zero, so that just the largest spectral gap (i.e., the difference between the largest and smallest Eigenvalues) is sufficient to estimate the range of spectral gaps. More detailed spectral information allows to further optimise the selection of gap values. In some cases, smaller errors may be obtained by selecting the gap values such that a distribution of the gap values follows the distribution of the spectral gaps.

In an embodiment, the one or more distinct gap values are obtainable by at least one of: uniform or quasi-uniform sampling in a predetermined range and/or a range defined by the spectral information; and sampling based on the spectral distribution. For example, the gap values may be sampled from a predetermined range, which may depend on the number of gap values to be selected. Additionally or alternatively, the gap values may be selected from a range defined by the spectral information, for example, a range from zero to a maximum spectral gap or a subrange thereof, or a range comprising a predetermined fraction of the spectral gaps. This range may be referred to as a range of potential spectral gaps.

In an embodiment, the generator is based on a non-interacting part corresponding to a plurality of non-interacting quantum elements and an interacting part based on an interaction of the plurality of quantum elements. The contribution of the interacting part to the spectral gaps of the generator may be relatively small compared to a contribution of the non-interacting part. In such an embodiment, the spectral information may comprise information on the Eigenvalue spectrum of the non-interacting part, and the one or more distinct gap values are obtainable by at least one of: uniform or quasi-uniform sampling in a range of potential spectral gaps of the non-interacting part; and sampling based on the distribution of positive spectral gaps of the non-interacting part.

In many cases, the spectrum of the generator not taking into account any interaction between the quantum elements, can more easily be determined than the spectrum of the generator taking into account the interaction between the quantum elements. The interacting part may be considered a perturbation of the non-interacting spectrum.

For example, the generator is based on a base generator corresponding to a plurality of non-interacting qubits and a contribution based on an interaction of the plurality of quantum elements, wherein a contribution of the interaction to the spectral gaps is relatively small compared to the base generator. This may result in clusters of spectral gaps, clustered around the spectral gaps of the base generator. Due to the interaction between the quantum elements, these clusters may be broadened and/or shifted. The gap values may be determined based on the spectral gaps of the base generator, possibly taking into account the effect of the interaction on the shape and central values of the clusters.

In an embodiment, the distinct parameter shifts are obtainable by at least one of: selecting the parameter shifts such that the variance of the derivative is minimized; and selecting, preferably uniformly selecting, the parameter shifts from a predetermined range, preferably from the range $\left[\frac{\pi}{4}, \frac{3\pi}{4}\right]$, more preferably from the range $\left[\frac{\pi}{4}, \frac{\pi}{2}\right]$.

The parameter shifts may be based on the gap values, in particular when the variance of the computed derivative is minimized. In general, parameter shifts that are too large may increase the bias error, and parameter shifts that are either too small or too large may increase the variance. It has been found that typically, parameter shifts from the cited ranges result in an acceptable total error (where the total error depends on both the bias error and the variance). Uniform sampling over the range is computationally straightforward, and ensures that the selected parameter shifts are not too close to each other.

The parameter shifts may be selected based on the hardware constraints of the quantum computer.

In an embodiment, obtaining the derivative of the quantum circuit with respect to the given parameter comprises, for each of the one or more distinct parameter shifts, determining a difference between the two shifted function values. Based on the determined differences, the one or more distinct gap values and the one or more distinct parameter shifts, a linear system of equations can be solved to determine a gap coefficient associated with each gap value. The derivative of the parametrized quantum circuit with respect to the given parameter can be computed based on the one or more distinct gap values and the associated gap coefficients.

The gap coefficients $R_j$ may be computed, for example, by solving a linear system of equations of the form

$$\left\{ F_k = 4 \sum_{j=1}^{K} \sin\left(\frac{\delta_k \Delta_j}{2}\right) R_j \right\}_{k=1}^{K}$$

wherein $F_k$ denotes the difference, e.g., a central difference, for the $k^{\text{th}}$ parameter shift $\delta_k$, and $K$ is the number of distinct gap values $\Delta_j$ and distinct parameter shifts $\delta_k$.

The derivative of the parametrized quantum circuit $f(x)$ with respect to the parameter x parametrizing the parametrized quantum circuit may be computed by

$$\partial_x f(x) = \sum_{k=1}^{K} \Delta_k R_k,$$

wherein $R_k$ denotes the gap coefficient associated with gap value $\Delta_k$, and $K$ is the number of distinct gap values $\Delta_k$.

In an embodiment, executing the one or more parametrized quantum circuits comprises translating each of the one or more parametrized quantum circuits into a sequence of signals (e.g., pulses, typically electric or electromagnetic pulses such as voltage pulses, optical pulses, or microwave pulses) and using the sequence of signals to operate the quantum elements in the quantum register of the quantum processor.

Thus, executing the one or more parametrized quantum circuits typically comprises the classical computer system controlling the quantum processor to perform operations defined by the one or more parametrized quantum circuits.

Generally, at least one of the signals in the sequence of signals depends at least in part on the given parameter. For example, a duration and/or an amplitude of the pulse may depend on the given parameter.

In an embodiment, receiving hardware measurement data comprises applying a read-out signal to quantum elements of the quantum processor and, in response to the read-out signal, measuring quantum hardware measurement data.

In general, the embodiments described herein can be implemented as sequences of operations that can be executed on, e.g., a neutral atom quantum computer, either in digital mode of operation, in analog mode, or in digital-analog mode. In particular, a hybrid quantum computer as described herein may include one or more of: a gate-based qubit device, a digital/analog quantum device, a neutral-atom-based quantum device, an optical qubit device and/or a gaussian boson sampling device.

As an example, the parametrized quantum circuit may be represented by a function $f(x)$ parameterized by a variable $x$. The function $f(x)$ is generated by a generator $\hat{G}$, i.e., the $x$-dependence of the function is of the form $\exp\left(-\mathrm{i}\frac{x}{2}\hat{G}\right)$. An approximation for the derivative $f(x)$ can be obtained by analysing a subset of the Eigenvalue spectrum of $\hat{G}$ and the structure of $\hat{G}$. Following the Kyriienko *et al.*, this allows the formation of a "stencil for the derivative" with unknown coefficients. This so-called stencil of the derivative refers to a sum of trigonometric functions, e.g., sine functions, of the parameter $x$ of various frequencies, that is, $\Sigma_i A_i \sin(\omega_i x + \phi_i)$ where $A_i$, $\omega_i$, and $\phi_i$ are arbitrary parameters referred to as the amplitude, frequency, and phase, respectively.

This expansion in trigonometric functions (in particular, complex exponentials) is natural in the sense that unitary quantum operators can be written as an exponential containing some operator (known as the generator). By going to its Eigenbasis, a sum of exponentials is obtained, containing spectral gaps in exponentials. Instinctively, the fact that quantum systems deal with oscillating quantum elements and complex exponentials, may serve to explain that such an expansion is natural.

The unknown coefficients $A_i$, $\omega_i$, and $\phi_i$ in the "stencil for the derivative" forms a system of linear equations. The value of the circuit at one or more shifted values of $x$ may be used to find the unknown coefficients in the "stencil for the derivative" and hence the derivative itself. These shifted values can be decided, at least in part, based on the spectral gaps and the structure of $\hat{G}$ obtained above. Consequently, evaluation of the quantum circuit at one or more shifted values of $x$ allows determination of the derivative.

The shifted values can be selected, for instance, based on the Eigenvalue spectrum of the generator, or in a uniform manner, e.g., centred around a value. Depending on the available information about the spectrum and/or the problem, the shifted values may be optimized for minimum variance and/or bias.

The spectral gaps (or gap values) of the methods described herein correspond to the frequencies $\omega_i$ of this

"stencil", and can be selected based on one or more of:

- uniform sampling with an upper and lower cutoff based on the spectral gaps and/or the desired resolution in a problem the quantum circuit is trying to model;
- selection of "dominant frequencies" that have a large contribution to the derivative, which may be determined depending on the encoding of the parameter $x$ (this can be done, for instance, in case of the so-called tower feature map);
- selection of representative frequencies, e.g., in the case of clustered frequencies, selection of representatives of one or more clusters.

If all the spectral gaps are included, and a trigonometric series is used as the "stencil for the derivative", this is exactly the procedure prescribed by GPSR. However, the embodiments described herein typically only use a relatively small number of gap values, which may or may not coincide with a subset of the spectral gaps; indeed, in general, it is not needed to have access to the complete Eigenvalue spectrum.

Compared to finite difference methods, which have no information about the generator or the parameter, the embodiments described herein can obtain a lower variance for the same number of shots and a lower bias error. In particular, the embodiments described herein allow optimising the gap values based on the generator, whereas finite difference methods do not prescribe a way to optimise the step size. In general, for finite difference methods, a small step size is required to obtain an acceptable bias error, but due to the quantum effects, a small step size leads to a high variance.

The normal parameter shift rule (PSR) is state of the art for non-interacting systems, but is not compatible with interacting systems or other with generators that are not idempotent or involuntary.

The generalised parameter shift rule (GPSR) works for any generator (including interacting systems), but requires too many circuit evaluations for generators whose Eigenvalue spectra have more than a few spectral gaps, taking into account the current hardware limitations. Moreover, the full generator spectrum, which is a prerequisite for the generalised parameter shift rule, may not always be known.

There are two types of relevant errors while calculating the derivative, bias and variance. Bias refers to the error in the estimate assuming you can perform infinite shots on the quantum hardware. Analytic differentiation methods such as the parameter shift rule have zero bias error. For finite difference methods, the bias error depends on the size of the finite difference, and tends to zero bias error only in the limit of the finite difference going to zero.

Since performing infinite shots on hardware is impossible, the statistical nature of output of a quantum circuit will contribute to an error in the estimate. This error is referred to as variance.

The methods described herein strike a balance between shot count, bias, and variance. They may thus provide a way to compute a derivative of a quantum circuit with sufficient accuracy and acceptable computational intensity.

In a further aspect, embodiments in this disclosure relate to a hybrid data processing system for computing a derivative of a quantum circuit. The hybrid data processing system may comprise a classical computer system and a quantum computer system, the classical computer system comprising at least one processor and a memory storing computer-readable instructions, the memory being communicatively coupled to the at least one processor, the quantum computer system comprising a quantum register with a plurality of quantum elements. The hybrid data processing system is configured to: determine or receive a formulation of a parametrized quantum circuit parametrized by a continuous variable in a variable space, the parametrized quantum circuit encoding a given parameter value of the continuous variable in a Hilbert space associated with the plurality of quantum elements; determine or receive a number of one or more distinct gap values; determine or receive a number of distinct parameter shifts, the number of distinct parameter shifts being equal to the number of one or more distinct gap values; executing, for each of the one or more distinct parameter shifts, the parametrized quantum circuit with the continuous variable increased by the respective parameter shift and with the continuous variable decreased by the respective parameter shift, the execution comprising: translating the parametrized quantum circuit into control signals for controlling the plurality of quantum elements and for readout of the plurality of quantum elements to obtain hardware measurement data; controlling the quantum computer system based on the control signals; and receiving, in response to the execution of the parametrized quantum circuit, the hardware measurement data; and processing the hardware measurement data to obtain the derivative of the parametrized quantum circuit with respect to the given parameter. In particular, the at least one processor may be configured to execute these steps in response to executing the computer-readable instructions.

The hybrid data computer system may further be configured to perform any of the method steps described above.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a nonexhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present invention may be written in any combination of one or more programming languages, including a functional or an object oriented programming language such as Java, Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Brief description of the drawings

The embodiments will be further illustrated with reference to the attached schematic drawings, in which:

**Fig. 1A** schematically depicts a quantum machine learning model, **Fig. 1B** shows an example of a basic form of a quantum feature map, and **Fig. 1C** shows an example of a derivative thereof according to an embodiment;
**Fig. 2** is a flowchart of method according to an embodiment;
**Fig. 3** is a flowchart of part of a method according to an embodiment;
**Fig. 4** is a flowchart of another part of a method according to an embodiment;
**Fig. 5A** and **5B** are flowcharts of yet other parts of a method according to an embodiment;
**Fig. 6A** and **6B** depict a computer system for executing methods for computing a derivative according to an embodiment of the invention;
**Fig. 7** is a graph showing an expected accuracy of a method according to an embodiment;
**Fig. 8A** and **8B** are graphs showing exemplary spectra;
**Fig. 9A-9D** are graphs showing experimental results of various methods according to embodiments;
**Fig. 10A** and **10B** are graphs showing exemplary spectra;
**Fig. 11A** and **11B** are graphs showing experimental results of various methods according to embodiments;
**Fig. 12A-12D** are graphs comparing a method according to an embodiment with a prior art method;
**Fig. 13** is a graph comparing a method according to an embodiment with a prior art method;
**Fig. 14A** is a graph showing an exemplary spectrum and **Fig. 14B** is a graph showing experimental results of various methods according to embodiments;
Fig. 15A-E schematically depict hardware-level schematics illustrating the application of logical operations to qubits using a quantum circuit;
**Fig. 16A** and **16B** schematically depicts a quantum circuit based on a digital-analog implementation; **Fig. 16C** schematically illustrates pulses corresponding to operation of a quantum circuit;
**Fig. 17A** and **17B** schematically depicts a quantum circuit based on a further digital-analog implementation;
**Fig. 18A** and **18B** schematically depicts a quantum circuit based on another digital-analog implementation;
Fig. 19 schematically depicts a quantum circuit based on a yet another digital-analog implementation; and
**Fig. 20A** and **20B** are block diagrams illustrating, respectively, an exemplary hybrid data processing system and an exemplary classical data processing system that may be used for executing methods and software products described in this disclosure.

Detailed description

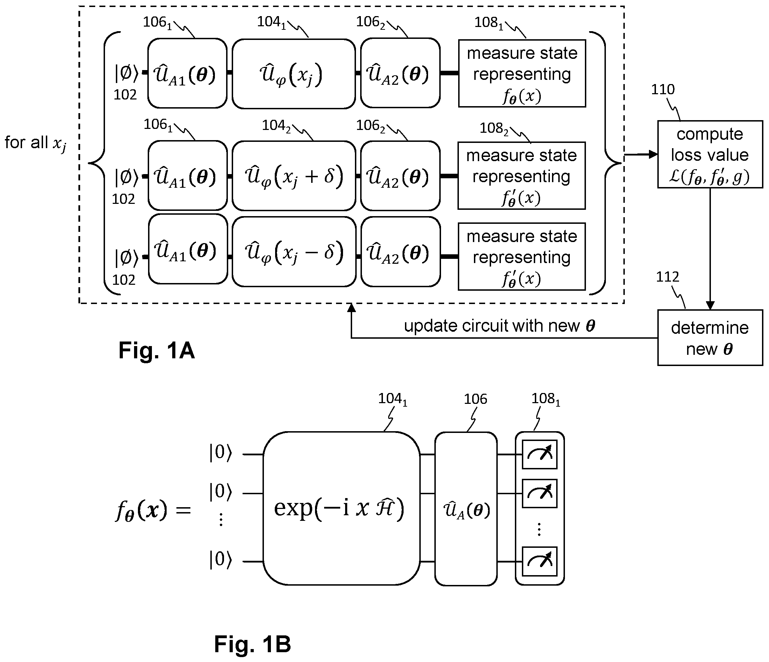

**Fig. 1A** schematically depicts a known method to solve a differential equation. The shown method is based on variational solving the problem using differentiable quantum circuits (DQC). As shown in the figure, the quantum model for the parametrised target function $f_\theta(x)$ may be represented by a quantum circuit including a feature map $\hat{U}_\varphi(x)$ **104₁** for encoding an independent variable $x$ into the Hilbert space of a quantum register **102,** and variational Ansätze $\hat{U}_{A1}(\theta)$ and $\hat{U}_{A2}(\theta)$ **106,** parameterized by trainable parameters $\theta$. Thus, one can write:

$$f_\theta(x) = \langle 0 | \, \hat{U}_{A1}^\dagger(\boldsymbol{\theta}) \, \hat{U}_\varphi^\dagger(x) \, \hat{U}_{A2}^\dagger(\boldsymbol{\theta}) \, \hat{C} \, \hat{U}_{A2}(\boldsymbol{\theta}) \, \hat{U}_\varphi(x) \, \hat{U}_{A1}(\boldsymbol{\theta}) \, | 0 \rangle \qquad (1)$$

where $\hat{C}$ denotes some cost operator used in the measurement of the quantum state.
The derivative of the target function is obtained using the same variational Ansätze with the same values for trainable parameters $\theta$ but with shifted values of $x$ (the exact method to obtain this derivative is described later).
A solution to the differential equation is found by variationally optimizing the trainable parameters $\theta$. The quantum circuits may include sequences (layers) of quantum gates which may be executed on the quantum register. Here, the only dependence on the input value (independent variable) is in the feature map; the variational Ansatz is independent of the input value x; and conversely, the feature map is independent of the trainable parameters $\theta$.
The training of the quantum model may be based on an optimization scheme, wherein after initialisation of the variational parameters, the gate operations of the quantum circuit may be executed, and the state of the quantum register may be measured using a cost function. Based on measured states **108₁,₂**, a loss value may be computed based on a loss function (block **110**). The loss function is based on the differential equation. For example, if the differential equation reads:

$$a\,f'(x) - b\,f(x) - g(x) = 0, \qquad\qquad (2)$$

(wherein $g(x)$ is a known function of $x$), then the loss function contains a contribution based on measurements **108₁** representing $f(x)$ and a contribution based on measurements **108₂** representing $f'(x)$. The scaling factors $a$ and $b$ and the known function $g(x)$ can be included by the (classical) optimiser without any quantum measurements. As the feature map encodes only a single $x$-value at a time, the loss function comprises a sum over a number of collocation points $x_j$. For the above example differential equation, the loss function may be:

$$\mathcal{L}_{\mathrm{DE}}(\boldsymbol{\theta}) = \sum_j \left\| a\,\frac{\mathrm{d}}{\mathrm{d}x} f_{\boldsymbol{\theta}}(x_j) - b\,f_{\boldsymbol{\theta}}(x_j) - g(x_j) \right\| \qquad\qquad (3)$$

where $\|\cdot\|$ denotes a suitable norm. (In practice, the loss function may also contain a contribution for a boundary condition, which is omitted here for simplicity.)

If the loss value does not meet one or more optimization conditions, the variational parameters may be updated by an optimizer **112**. Thereafter, the quantum circuit may be executed using the updated variational parameters and the state of the quantum registered may be measured and a new loss value may be computed. These steps may be repeated until the one or more optimization conditions are met. The state of the optimized quantum circuit may represent an optimized approximation of a desired target function.

Thus, the logic gates of the quantum circuits used in the quantum machine learning scheme are parameterized by a set of trainable parameters $\theta$ which are trained by a classical optimizer to minimize a loss function. In general, these parametrized quantum circuits can be used as quantum machine learning models, applied to applications such as learning or generating an unknown distribution from a set of input features or solving differential equations.

**Fig. 1B** shows an example of a basic form of a quantum feature map, which is here illustrated as an example of a 'time encoding' type feature map. In this example, the feature map **104₁** is implemented using a Hamiltonian $\widehat{\mathcal{H}}$ acting on all the qubits simultaneously and is parametrized by a function of variable $\boldsymbol{x}$ which translates to the time for which the Hamiltonian $\widehat{\mathcal{H}}$ is applied. Throughout this applications, qubits are used as standard example of quantum elements, but most arguments are equally applicable to systems with other quantum elements, e.g., qudits. Measurement of the quantum state requires one measurement per encoding qubit. Depending on the quantum hardware, the qubits may be measured one-by-one, or all in a single measurement.

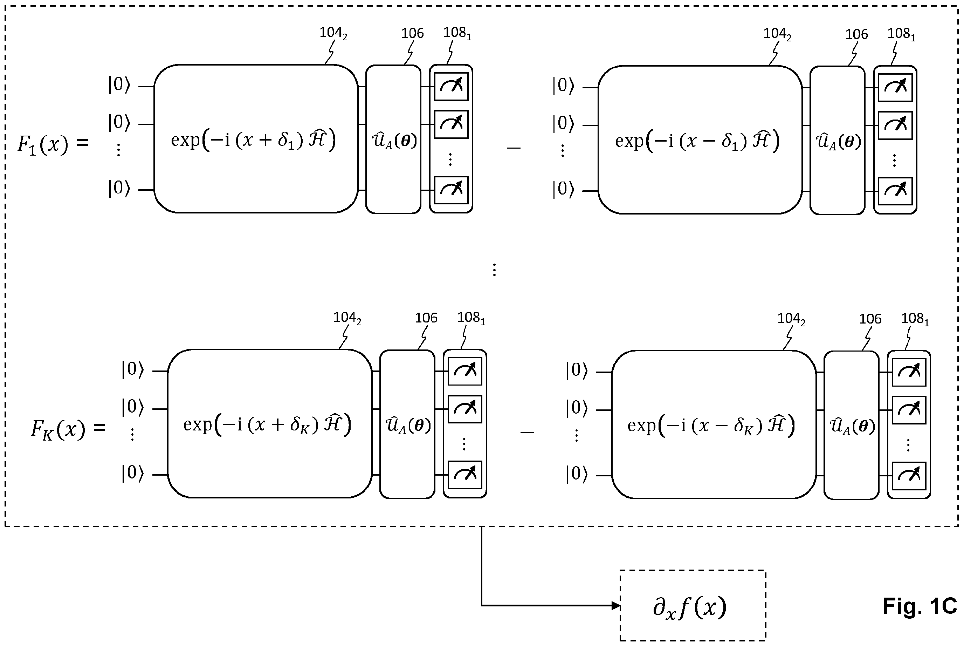

**Fig. 1C** illustrates an example of a derivative quantum circuit for the time encoding feature map of **Fig. 1B.** Differentiation over variable $x$ involves calculating the output of the circuit with shifted values.

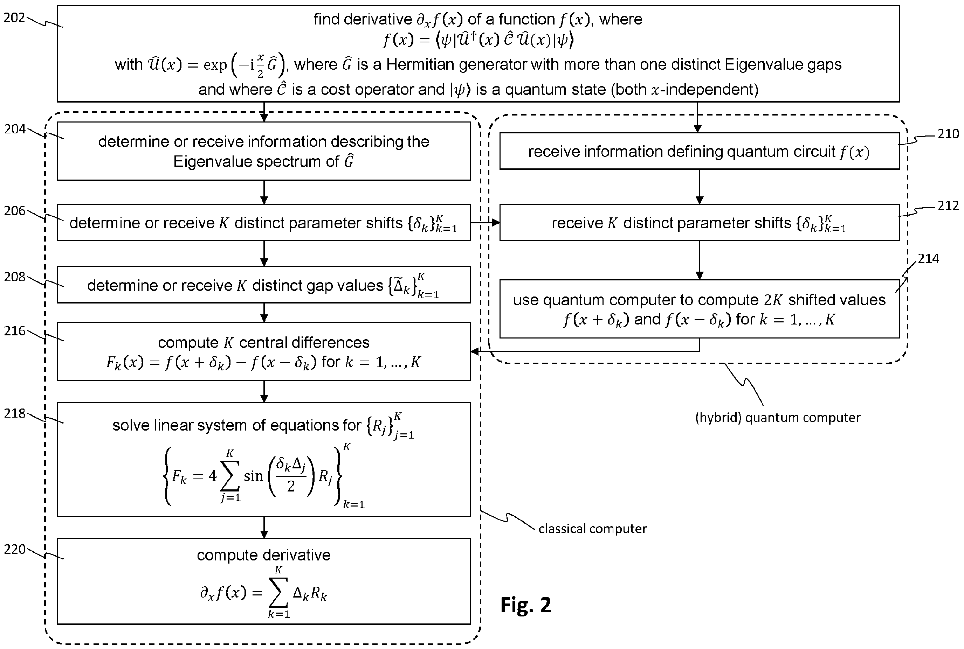

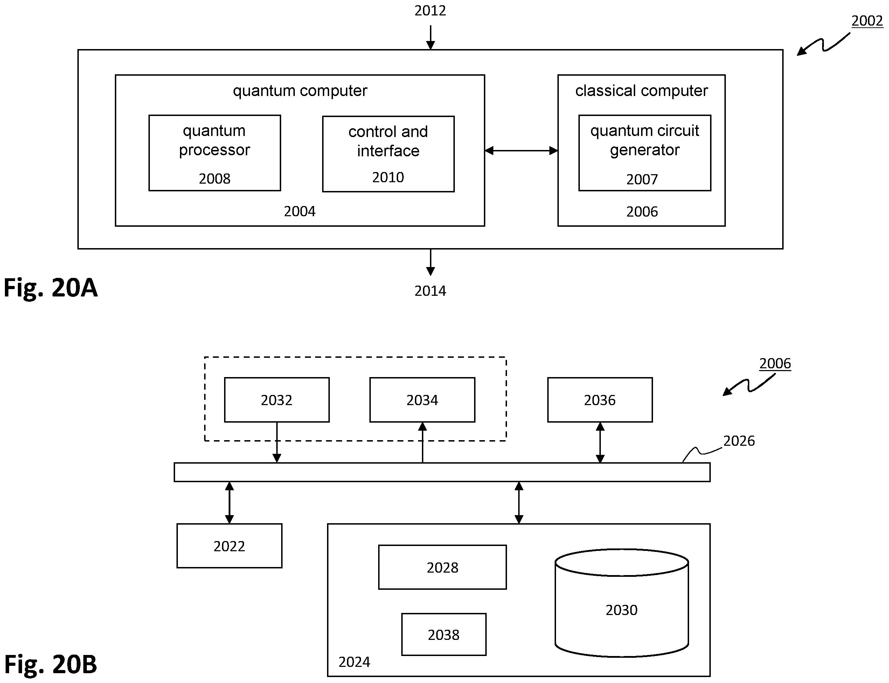

**Fig. 2** is a flowchart of a method for computing a derivative of a quantum circuit according to an embodiment. The method may be performed by a hybrid data processing system comprising a classical computer system and a quantum computer system comprising a plurality of quantum elements. For example a hybrid data processing system as described below with reference to **Fig. 20.**

In the example shown in **Fig. 2,** the problem to be solved is to find an (exact or approximate) derivative $\partial_x f(x)$ of a function $f(x)$ represented by a parametrized quantum circuit

$$f(x) = \langle\psi|\widehat{\mathcal{U}}^\dagger(x)\,\hat{\mathcal{C}}\,\widehat{\mathcal{U}}(x)|\psi\rangle \qquad\qquad (4)$$

where $\widehat{\mathcal{U}}(x) = \exp\left(-\mathrm{i}\frac{x}{2}\hat{G}\right)$ denotes a unitary operator associated with a Hermitian generator $\hat{G}$ with more than one distinct Eigenvalue gaps. $\hat{\mathcal{C}}$ denotes an ($x$-independent) cost operator and $|\psi\rangle$ denotes a quantum state (also $x$-independent). It is noted that for an arbitrary $\hat{\mathcal{C}}$ and $|\psi\rangle$, eq. (4) represents a completely general quantum circuit, as any ($x$-independent) operator before or after $\widehat{\mathcal{U}}(x)$ may be absorbed into $|\psi\rangle$ and $\hat{\mathcal{C}}$, respectively. As noted, in this context, $x$ represents the variable with respect to which the derivative is to be determined. In the context of a quantum neural network as described above with reference to **Fig. 1A,** this can be either an input parameter $x$ or one of the model parameters $\theta$.

Thus, in a first step **202,** the method comprises receiving or determining a formulation of the parametrized quantum circuit to be differentiated, and an indication of the parameter with respect to which the parametrized quantum circuit is to be differentiated, which parameter is here represented by a continuous variable $x$ in a variable space $X$. The parametrized quantum circuit may encode a given parameter value of the continuous variable $x$ in a Hilbert space associated with the plurality of quantum elements.

A step **204** comprises determining or receiving spectral information describing an Eigenvalue spectrum of a generator $\hat{G}$ associated with the parametrized quantum circuit. If the Eigenvalue spectrum comprises only a single spectral gap (i.e., of the generator has only two distinct Eigenvalues, typically $\pm\lambda$), the normal Parameter Shift Rule may be applied. Hence, it is assumed that the Eigenvalue spectrum comprises a plurality of distinct spectral gaps.

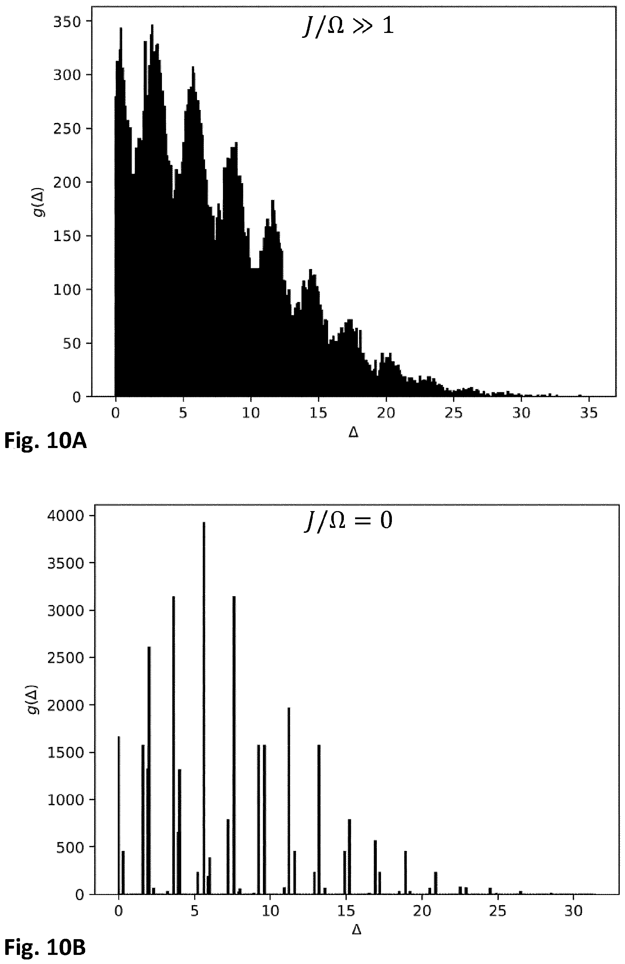

A spectral gap is defined as a positive difference between two distinct Eigenvalues of the generator. For example, if the generator has three (possibly degenerate) Eigenvalues $\lambda_1 < \lambda_2 < \lambda_3$, then the potential spectral gaps are $\lambda_2 - \lambda_1$, $\lambda_3 - \lambda_2$, and $\lambda_3 - \lambda_1$ (the first two differences may be the same gap, e.g., for an Eigenvalue set $\{-\lambda, 0, \lambda\}$). Thus, a generator with more than one distinct spectral gap is equivalent to a generator with more than two distinct (possibly degenerate) Eigenvalues. Some examples of Eigenvalue spectra, and ways to describe those spectra with spectral information, are discussed in more detail below, with reference to **Fig. 10A** and **10B.**

The spectral information may comprise, e.g., an estimate for the largest spectral gap in the Eigenvalue spectrum, a statistical description of the Eigenvalue spectrum or of an approximation thereof, a description of a dominant structure of the Eigenvalue spectrum, a complete list or substantially complete list of all spectral gaps, et cetera. Additionally or alternatively, the spectral information may comprise information about the Eigenvalues from which properties of the Eigenvalue spectrum may be derivable, e.g., estimates (or exact values) of the smallest and largest Eigenvalues, a statistical distribution of the Eigenvalues, or a complete list of all Eigenvalues, et cetera.

In some embodiments, step **204** may be omitted, and the gap values may be determined in other ways, e.g., heuristically.

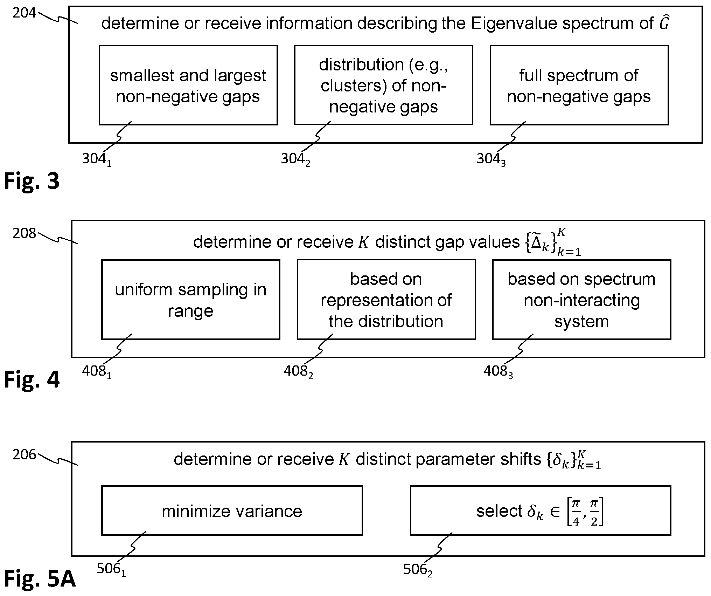

A step **208** comprises determining or receiving a number $K$ of one or more distinct gap values $\{\Delta_k\}_{k=1}^{K}$,, (typically) based on the spectral information. The gap values $\{\widetilde{\Delta}_k\}_{k=1}^{K}$ may or may not coincide with one or more of the plurality of spectral gaps $\{\Delta_s\}_{s=1}^{S}$ of the generator $\hat{G}$. The manner of selecting the gap values can depend on the spectral information. For example, if only a spectral gap range is known (e.g., because the spectral gap information comprises only a maximum spectral gap), the gap values may be selected uniformly or quasi-uniformly from that range. If a full range of spectral gaps is known, the selected values may be optimized numerically, as is briefly described below with reference to **Fig. 4.**

A step **206** comprises determining or receiving one or more distinct parameter shifts $\{\delta_k\}_{k=1}^{K}$. These should be one parameter shift for each gap value, so typically, the number of (distinct) parameter shifts is equal to the number of distinct spectral gaps. As an example, the parameter shifts may be selected from the range $\left[\frac{\pi}{4}, \frac{3\pi}{4}\right]$, or from the range $\left[\frac{\pi}{4}, \frac{\pi}{2}\right]$. Parameter shifts in this range typically strike a balance between bias error and variance. The parameter shifts may be determined based on the gap values, or independently thereof.

In the following, parameter shift, spectral gaps, and gap values are assumed to be distinct, unless explicitly or implicitly defined otherwise.

A step **210** comprises receiving information defining the quantum circuit $f(x)$. This information may have the form of, or be convertible to, a set of control values to implement the quantum circuit on the quantum computer. A step **212** comprises receiving the parameter shifts $\{\delta_k\}_{k=1}^{K}$. A step **214** comprises using the quantum computer to compute shifted values that correspond essentially to $\{f(x \pm \delta_k)\}_{k=1}^{K}$. In some implementations, these steps may be combined into, e.g., a set of instructions for implementing the quantum circuit for $f(x + \delta_k)$ and $f(x - \delta_k)$.

In other words, for each of the one or more distinct parameter shifts, the parametrized quantum circuit is executed with the continuous variable $x$ increased by the respective parameter shift and with the continuous variable $x$ decreased by the respective parameter shift. Typically, for each shifted value, the measurement is repeated a number of times to obtain an expectation value with a known, or at least estimable, uncertainty.

The execution of the parametrized quantum circuit comprises translating the parametrized quantum circuit into control signals for controlling the plurality of quantum elements and for readout of the plurality of quantum elements to obtain hardware measurement data, and controlling the quantum computer system based on the control signals. This results in the generation of measurement data, which can be converted to numerical values representing the output of the quantum circuit, i.e., numerical values for $f(x \pm \delta_k)$.

Based on the determined values $\{f(x \pm \delta_k)\}_{k=1}^K$, in a step **216,** a set of central differences $\{F_k(x) = f(x + \delta_k) - f(x - \delta_k)\}_{k=1}^K$ is determined. Based on these differences $\{F_k\}_{k=1}^K$, the set of gap values $\{\widetilde{\Delta}_k\}_{k=1}^K$, and the set of parameter shifts $\{\delta_k\}_{k=1}^K$, in a step **218,** a system of linear equations may be defined and solved for a set of gap coefficients $\{R_k\}_{k=1}^K$. A typical example of such a linear system of equations is:

$$\left\{ F_j = 4 \sum_{k=1}^K \sin\left(\frac{\delta_j \widetilde{\Delta}_k}{2}\right) \tilde{R}_k \right\}_{j=1}^K \tag{5}$$

Using the determined set of gap coefficients $\{R_k\}_{k=1}^K$ and the set of gap values $\{\widetilde{\Delta}_k\}_{k=1}^K$, the derivative may be computed as:

$$\left. \frac{\mathrm{d}f(x)}{\mathrm{d}x} \right|_K = \sum_{k=1}^K \widetilde{\Delta}_k \tilde{R}_k \tag{6}$$

Following Kyriienko *et al.,* a function $f(x)$ of a variable $x$ is defined as a quantum expectation of a Hermitian cost operator $\hat{C}$ :

$$f(x) = \langle \psi | \, \hat{U}^\dagger(x) \, \hat{C} \, \hat{U}(x) | \psi \rangle, \tag{7}$$

where $|\psi\rangle$ is some quantum state (independent of $x$) and $\hat{U}(x) = \exp\left(-\mathrm{i}\frac{x}{2}\,\hat{G}\right)$ is a unitary evolution operator with its dynamics determined by Hermitian generator $\hat{G}$. The derivative of $f(x)$ is then given by

$$\frac{\mathrm{d}f(x)}{\mathrm{d}x} = \sum_{s=1}^S \Delta_s R_s, \tag{8}$$

where S is the number of distinct positive spectral gaps $\Delta_s$ of generator $\hat{G}$. Spectral gaps equal to zero do not contribute to the derivative, and may be ignored. In the following, spectral gaps will be assumed to be positive, even if not labelled explicitly as such. The gap coefficients $R_s$ necessary for derivative evaluation can be obtained by solving the following system of linear equations:

$$\begin{cases} F_1 = 4 \sum_{s=1}^{S} \sin\left(\frac{\delta_1 \Delta_s}{2}\right) R_s \\ F_2 = 4 \sum_{s=1}^{S} \sin\left(\frac{\delta_2 \Delta_s}{2}\right) R_s \\ \quad \dots \\ F_S = 4 \sum_{s=1}^{S} \sin\left(\frac{\delta_S \Delta_s}{2}\right) R_s \end{cases} \qquad (9)$$

Here, $F_s = f(x + \delta_s) - f(x - \delta_s)$ denotes a (central) difference between shifted functions $f(x)$ with parameter shifts $\delta_s$.

In a more compact way, the linear equation system can be written as a matrix equation:

$$\mathbf{F}^{S \times 1} = \mathbb{M}^{S \times S} \mathbf{R}^{S \times 1}, \qquad (10)$$

wherein $\mathbb{M}^{S \times S}$ is an $S \times S$ matrix with elements $\mathbb{M}_{ij}^{S \times S} = 4 \sin\left(\frac{\delta_i \Delta_j}{2}\right)$ and $\mathbf{F}$ and $\mathbf{R}$ are vectors containing elements $F_s$ and $R_s$, respectively.

Surprisingly, it has been found that good results may be obtained using only $K \ll S$ terms (i.e., using $K$ distinct gap values $\tilde{\Delta}_k$ and $K$ distinct parameter shifts $\delta_k$ with $k = 1, ..., K$). Mathematically, this can be understood by redefining the gap coefficients $R_s$ to $\tilde{R}_k$ on the right-hand side of system of equations (9) and introduce new gap values $\left\{\tilde{\Delta}_k\right\}_{k=1}^{K}$. In the general case, the gap values $\tilde{\Delta}_k$ do not (necessarily) coincide with the 'original' set of generator spectral gaps $\left\{\Delta_s\right\}_{s=1}^{S}$. With this notation the $j$-th equation of system (9) reads:

$$F_j = 4 \sum_{k=1}^{K} \sin\left(\frac{\delta_j \tilde{\Delta}_k}{2}\right) \tilde{R}_k \qquad (11)$$

or in the matrix notation, $\mathbb{M}_{ij}^{K \times K} = 4 \sin\left(\frac{\delta_i \tilde{\Delta}_j}{2}\right)$. The leads to an approximation of the derivative, given by:

$$\left.\frac{\mathrm{d}f(x)}{\mathrm{d}x}\right|_K = \sum_{k=1}^{K} \tilde{\Delta}_k \tilde{R}_k \qquad (12)$$

Using matrix notation, the "effective" linear system now can be written as

$$\mathbf{F}^{K \times 1} = \mathbb{M}^{K \times K} \mathbf{R}^{K \times 1}, \qquad (13)$$

The general solutions for the $\tilde{R}_k$ of this equation can be obtained using Cramer's rule:

$$\tilde{R}_k = \frac{\det\left(\mathbb{M}_{(k)}^{K \times K}\right)}{\det\left(\mathbb{M}^{K \times K}\right)}, \qquad (14)$$

where $\mathbb{M}_{(k)}^{K \times K}$ is a matrix formed by replacing $k$-th column of the $\mathbb{M}^{K \times K}$ matrix with the vector $\mathbf{F}^{K \times 1}$. This solution can be simplified by using the explicit components of the vector $\boldsymbol{F}^{K \times 1}$ with original set of spectral gaps $\{\Delta_s\}_{s=1}^{S}$ given by eq. (9). For example, for $K = 2$, the value for $\tilde{R}_1$ can be obtained by

$$\tilde{R}_1 = \sum_{s=1}^{S} \frac{\begin{vmatrix} \sin\left(\frac{\delta_1 \Delta_s}{2}\right) & \sin\left(\frac{\delta_1 \tilde{\Delta}_2}{2}\right) \\ \sin\left(\frac{\delta_2 \Delta_s}{2}\right) & \sin\left(\frac{\delta_2 \tilde{\Delta}_2}{2}\right) \end{vmatrix}}{\begin{vmatrix} \sin\left(\frac{\delta_1 \tilde{\Delta}_1}{2}\right) & \sin\left(\frac{\delta_1 \tilde{\Delta}_2}{2}\right) \\ \sin\left(\frac{\delta_2 \tilde{\Delta}_1}{2}\right) & \sin\left(\frac{\delta_2 \tilde{\Delta}_2}{2}\right) \end{vmatrix}} R_s = \sum_{s=1}^{S} \eta_{1s}\left(\Delta_s, \tilde{\Delta}_1, \tilde{\Delta}_2, \delta_1, \delta_2\right) R_s \qquad (15)$$

where $|\cdot|$ denotes the determinant of the matrix with $\left|\mathbb{M}_{ij}\right|$. The sum in the expression above comes from the multilinearity property of determinants stating that if a column of matrix can be written as a sum of column vectors then the determinant of such matrix is equal to the sum of determinants with the corresponding column substituted with each of the vectors. Note that each function $\eta_{1s}(\Delta_s, \tilde{\Delta}_1, \tilde{\Delta}_2, \delta_1, \delta_2)$ only depends on the corresponding "real" spectral gap $\Delta_s$. For example, for $K = 2$ and some $1 \le k \le K$ the explicit form of function $\eta_{ks}(\Delta_s, \tilde{\Delta}_1, \tilde{\Delta}_2, \delta_1, \delta_2)$ reads:

$$\eta_{ks}\left(\Delta_s, \tilde{\Delta}_1, \tilde{\Delta}_2, \delta_1, \delta_2\right) = (-1)^{k+1} \frac{\sin\left(\frac{\delta_1 \Delta_s}{2}\right) \sin\left(\frac{\delta_2 \tilde{\Delta}_l}{2}\right) - \sin\left(\frac{\delta_2 \Delta_s}{2}\right) \sin\left(\frac{\delta_1 \tilde{\Delta}_l}{2}\right)}{\sin\left(\frac{\delta_1 \tilde{\Delta}_1}{2}\right) \sin\left(\frac{\delta_2 \tilde{\Delta}_2}{2}\right) - \sin\left(\frac{\delta_2 \tilde{\Delta}_1}{2}\right) \sin\left(\frac{\delta_1 \tilde{\Delta}_2}{2}\right)} \qquad (16)$$

where $l = (k + 1) \bmod K$ (i.e., $l = 1$ if $k = 2$, and vice versa).

The results of eqs. (14) and (15) can be straightforwardly generalized to give solutions for any system containing any number $K$ of equations:

$$\tilde{R}_k = \sum_{s=1}^{S} \eta_{ks}\left(\Delta_s, \{\tilde{\Delta}_k\}_{k=1}^{K}, \{\delta_k\}_{k=1}^{K}\right) R_s = \sum_{s=1}^{S} \frac{\det\left(\mathbb{A}_{(ks)}^{K \times K}\right)}{\det(\mathbb{M}^{K \times K})} R_s \qquad (17)$$

Herein, the $k$-th column of the matrices $\mathbb{A}_{(ks)}^{K \times K}$ contains the vector $\boldsymbol{B}_{(s)}^{K \times 1}$ composed of elements $\boldsymbol{B}_{sk}^{K \times 1} = 4 \sin\left(\frac{\delta_k \Delta_s}{2}\right)$, meaning that $\boldsymbol{F}^{K \times 1} = \sum_{s=1}^{S} \boldsymbol{B}_{(s)}^{K \times 1} R_s$. Note that the functions $\eta_{ks}\left(\Delta_s, \{\tilde{\Delta}_k\}_{k=1}^{K}, \{\delta_k\}_{k=1}^{K}\right)$ above are given by ratios of determinants, thus their explicit forms contain combinations of sine functions similarly to eq. (15). Plugging the expression of eq. (17) into the definition given in eq. (12), the approximate derivative can be written as

$$\left. \frac{\mathrm{d}f(x)}{\mathrm{d}x} \right|_K = \sum_{k=1}^{K} \tilde{\Delta}_k \tilde{R}_k = \sum_{k=1}^{K} \sum_{s=1}^{S} \tilde{\Delta}_k \, \eta_{ks}\left(\Delta_s, \{\tilde{\Delta}_k\}_{k=1}^{K}, \{\delta_k\}_{k=1}^{K}\right) R_s$$
$$= \sum_{s=1}^{S} \xi_s\left(\Delta_s, \{\tilde{\Delta}_k\}_{k=1}^{K}, \{\delta_k\}_{k=1}^{K}\right) R_s \qquad (18)$$

wherein the (new) functions $\xi_s$ are defined by:

$$\xi_s\left(\Delta_s,\{\widetilde{\Delta}_k\}_{k=1}^K,\{\delta_k\}_{k=1}^K\right)=\sum_{k=1}^K \widetilde{\Delta}_k\,\eta_{ks}\left(\Delta_s,\{\widetilde{\Delta}_k\}_{k=1}^K,\{\delta_k\}_{k=1}^K\right) \tag{19}$$

To examine the behaviour of the functions $\delta_s$, the parameter shifts $\delta_s$ are written as products $\delta_s \equiv \alpha\,\delta_s'$, with $\alpha$ being a small parameter. It may be noted that eq. (19) is structurally similar to eq. (8), with the functions $\varsigma s$ taking the place of the spectral gaps $\Delta_s$. Since $\varsigma s$ is a function of parameter $\alpha$, the function $\varsigma s$ can be expanded with respect to $\alpha$. For example, for $K = 2$, the combination of eqs. (15) and (19) yields the following expansion:

$$\xi_s = \Delta_s + \alpha^4\frac{\delta_1^2\,\delta_2^2}{1920}\,\Delta_s\big(\widetilde{\Delta}_1^2-\Delta_s^2\big)\big(\Delta_s^2-\widetilde{\Delta}_2^2\big)+\mathcal{O}(\alpha^6) \tag{20}$$

This expression shows that $\xi_s$ is equal to the s-th spectral gap $\Delta_s$ up to the 4$^{th}$ order in $\alpha$. Thus, if $\alpha$ is sufficiently small and, consequently, the parameter shifts $\delta_1$ and $\delta_2$ are small as well, it is sufficient to use only $K = 2$ equations to estimate the derivative while introducing only 4$^{th}$ order errors.

However, as $\alpha$ gets bigger, $\mathcal{O}(\alpha^4)$ and higher order terms might get significant and a third or even more equations may be needed to estimate the derivative more accurately. Repeating the same expansion procedure for $K = 1$ and $K = 3$ results in, respectively:

$$K = 1:\ \xi_s = \Delta_s + \mathcal{O}(\alpha^2) \tag{21}$$

$$K = 3:\ \xi_s = \Delta_s + \mathcal{O}(\alpha^6) \tag{22}$$

Indeed, with more equations included in the linear system, the difference $\Delta_s$ - $\xi_s$ becomes smaller, more specifically $\Delta_s$ - $\xi_s$ = $\mathcal{O}(\alpha^{2K})$. Thus, eq. (12) can be written as:

$$\left.\frac{\mathrm{d}f(x)}{\mathrm{d}x}\right|_K=\sum_{s=1}^S\big(\Delta_s+\mathcal{O}(\alpha^{2K})\big)\,R_s \tag{23}$$

This equation contains the dependence on the set of arbitrary gap values $\{\widetilde{\Delta}_k\}_{k=1}^K$ only in the higher-order error terms of approximation of spectral gaps $\Delta_s$. Disregarding these error terms, the expression in eq. (23) coincides with the exact expression of derivative in full GPSR form as given in eq. (8). This implies that, in principle, any gap values $\{\widetilde{\Delta}_k\}_{k=1}^K$ may be used to solve the linear equation system of eq. (11) whilst still obtaining an accurate approximation of the real derivative as given in eq. (8).

Terms involving $\alpha$ appear only in higher-order terms for large values of $K$ and thus, these error terms are sufficiently small for larger values of $\alpha$ and, hence, for larger parameter shifts $\delta_s$ as well. Consequently, the more equations are included in the linear system, the larger the parameter shift that can be used to retain a similar accuracy of the derivative estimation.

This follows also from application of the mathematical induction principle. Since it has been shown that $\varsigma s \approx \Delta_s$ for low numbers K of equations, it can be assumed that such relation holds for $K = S$ - 1, so that the error is $\mathcal{O}(\alpha^{2(S-1)})$. Therefore, for $K = S$ the error should be on the order of, or smaller than, $\mathcal{O}(\alpha^{2S})$. Since in this case, the full equation system is solved, it follows that the prefactor of each $R_s$ is exactly equal to $\Delta_s$, or equivalently, that the error is infinitely small, i.e., $\mathcal{O}(\alpha^N)$ with $N \to \infty$. Hence, the expansion is valid for $K = S$, and therefore for $K = S$ - 1 as well. Consequently, the assumed relation of error magnitude holds for any $K$.

For general $K$, eq. (20) can be rewritten as:

$$\xi_s = \Delta_s - \alpha^{2K}\Delta_s \frac{(-1)^K}{N} \prod_{k=1}^{K} \delta_k^2 \left(\widetilde{\Delta}_k^2 - \Delta_s^2\right) + \mathcal{O}(\alpha^{2(K+1)}) \qquad (24)$$

where $N$ is a numerical constant that depends on $K$. Thus, each error term contains factors of the form $\left(\widetilde{\Delta}_k^2 - \Delta_s^2\right)$. This means that if a gap value $\widetilde{\Delta}_k$ is selected equal to some spectral gap $\Delta_s$ of the generator, the corresponding error term vanishes. This observation naturally leads to conclusion that when $K = S$ equations are included in the linear system of (9), and the gap values $\left\{\widetilde{\Delta}_k\right\}_{k=1}^{K}$ are selected to coincide with the actual set of spectral gaps $\left\{\Delta_s\right\}_{s=1}^{S}$, the original exact derivative as given by GPSR is recovered, since all the error terms vanish.

**Fig. 3** illustrates various options of determining or receiving information describing an Eigenvalue spectrum. Depending on the embodiment, step **204** as described above with reference to **Fig. 2** may comprise determining or receiving (in a step **304$_1$**) one or more representative values of the spectral gaps defined by the Eigenvalue spectrum associated with the quantum circuit to be differentiated. Generally, the smallest spectral gap may assumed to be zero or close to zero, and consequently an estimate for the range of spectral gaps may be provided by (an estimate of) the largest spectral gap. In other embodiments, instead of the maximum, one or more different representative value may be provided, such as the 99$^{th}$ percentile, 95$^{th}$ percentile, 90$^{th}$ percentile, mean, median, interquartile range, et cetera.

Additionally or alternatively, the information describing the Eigenvalue spectrum may comprise a (statistical description) of a distribution of spectral gaps (step **304$_2$**). For example, the spectral gap distribution may be described, at least approximately, by a known statistical distribution.

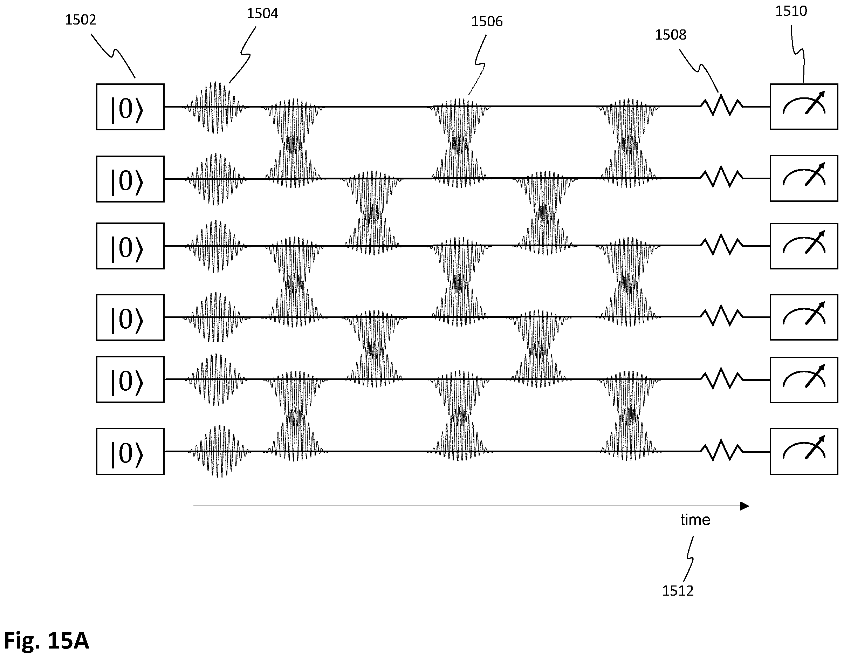

As a further example, the generator may be separable in an unperturbed generator (typically with a relatively simple spectrum) and a perturbation. This can, for instance, be the case in a neutral-atom implementation, where the unperturbed generator represents the Hamiltonian of a non-interacting system, and the perturbation represents the deviation from the unperturbed generator caused by the interaction between the neutral atoms (qubits). It is noted that such interaction is required for the quantum system to obtain quantum supremacy over a classical system. Examples of other hardware implementations are described below with reference to Fig. 15A-E.

Consequently, the spectral distribution may be based on a non-interacting part corresponding to a plurality of non-interacting quantum elements and an interacting part based on an interaction of the plurality of quantum elements, wherein a contribution of the interacting part to the spectral gaps of the generator is relatively small compared to a contribution of non-interacting part. In such a case, the spectral information may comprise information on the Eigenvalue spectrum of the non-interacting part. An example is described in more detail below with reference to **Fig. 10A** and **10B.**

In such a case, the gap values may be selected based on the distribution of the spectral gaps of the non-interacting part. Alternatively, information about the non-interacting part may be used to estimate properties of the spectral distribution, such as a range of spectral values. The gap values may then be selected, for instance, via uniform or quasi-uniform sampling in a range of potential spectral gaps of the non-interacting part.

Step **304s** describes a case where the spectral information comprises the full spectrum of spectral gaps. In practice, this is often not obtainable for a reasonably sized system with a non-trivial generator, but it can be useful for, for instance so-called toy systems or systems with a relatively easy to analyse generator.

**Fig. 4** illustrates various options of determining or receiving gap values. The options for selecting gap values may depend on the spectral information as received or determined in step **204.** In general, the more detailed the spectral information, the more options there are available for selecting gap values.

For instance, a method that requires minimal information on the spectral distribution is uniform a quasi-uniform sampling from a range (step **408$_1$**). Examples are selecting gap values with fixed intervals (e.g., $\widetilde{\Delta}_k = a + b\,k$, $k = 1, 2, ..., K$, with $a$ and $b$ positive constants; exemplary choices are $a \ll 1$ and $b \ll 1$), random sampling from fixed intervals, or sampling according to a uniform distribution. Other methods are known in the art.

If a more detailed distribution is known, the gap values may be selected based on the spectral distribution (step **408$_2$**). For example, the gap values may be selected such that the distribution of the gap values is similar to the spectral distribution. That way, it can be ensured the full range of spectral gaps is represented by the selected gap values. Moreover, regions with large numbers of spectral gaps may have more gap values selected.

In particular, when the spectral distribution features a number of peaks, the gap values may be selected such that there is one gap value for each peak, or for a subset of peaks. This can be the case, for instance, when the generator can be written as an unperturbed generator with a relatively small perturbation; in that case, the gap values may be selected based on the spectrum of the non-interacting system (step **408$_3$**).

However, the form of error terms in eq. (24) also suggests that also when the derivative is approximated by using only $K < S$ gap values (and hence, equations in the linear system (11)), the set of gap values $\{\widetilde{\Delta}_k\}_{k=1}^{K}$ can be selected such that the error terms are minimized. Intuitively, this happens when the gap values $\{\widetilde{\Delta}_k\}_{k=1}^{K}$ are close to as many actual spectral gaps as possible, thus reducing the magnitude of error terms and pushing the sum in parenthesis multiplied by corresponding $R_s$ closer to $\Delta_s$. In other words, by selecting the gap values $\{\widetilde{\Delta}_k\}_{k=1}^{K}$ such that they are a good representation of the distribution of the spectral gaps $\{\Delta_s\}_{s=1}^{S}$, the error of the approximation can be kept small.

Inspired by the above results, a $K$-dependent error function may be defined as:

$$Q_K(\Delta_s) = \xi_s(\Delta_s) - \Delta_s, \qquad\qquad (25)$$

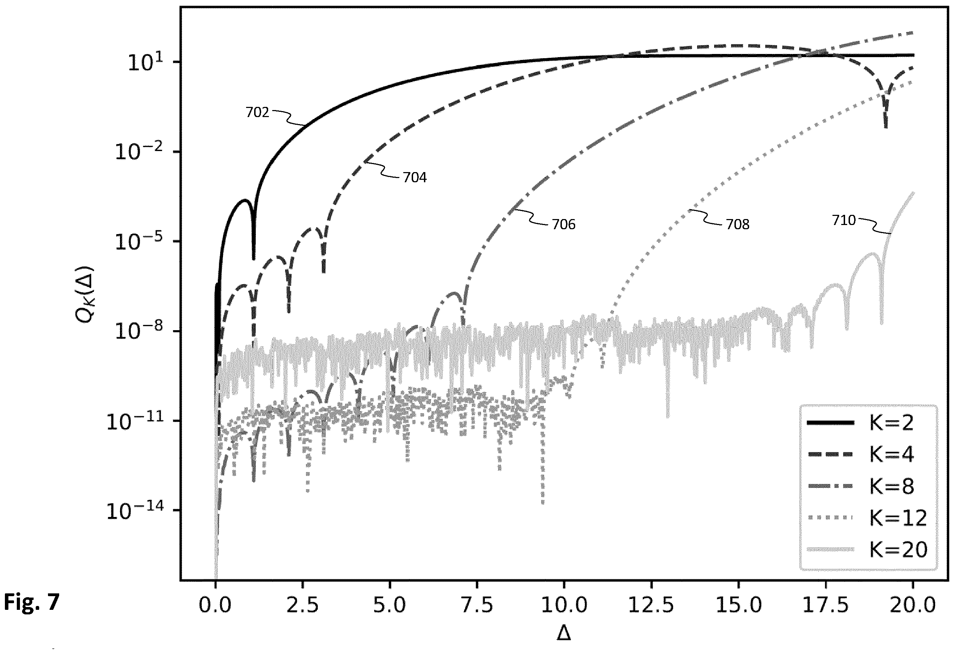

or $Q_K(\Delta) = \xi(\Delta) - \Delta$, dropping the subscript s. It turns out that for many generators, there exists an interval $W$ of generator spectral gaps where $Q_K(\Delta_s)$ is small. Exemplary behaviour of this function $Q_K(\Delta)$ is shown in **Fig. 7**. In such cases, a good choice for the gap values $\{\widetilde{\Delta}_k\}_{k=1}^{K}$ is a set values sampled from a uniform distribution over the interval $[a, K - 1 + a]$, where $a$ is a small lower bound. For example, the gap values $\{\widetilde{\Delta}_k\}_{k=1}^{K}$ may be selected as the $K - 1$ smallest non-negative integers, offset by a small positive value $a$, i.e., $\{a, 1 + a, 2 + a, ... , K - 1 + a\}$. The gap values may also be scaled based on the range of spectral gaps, such that at least most of the range is covered.

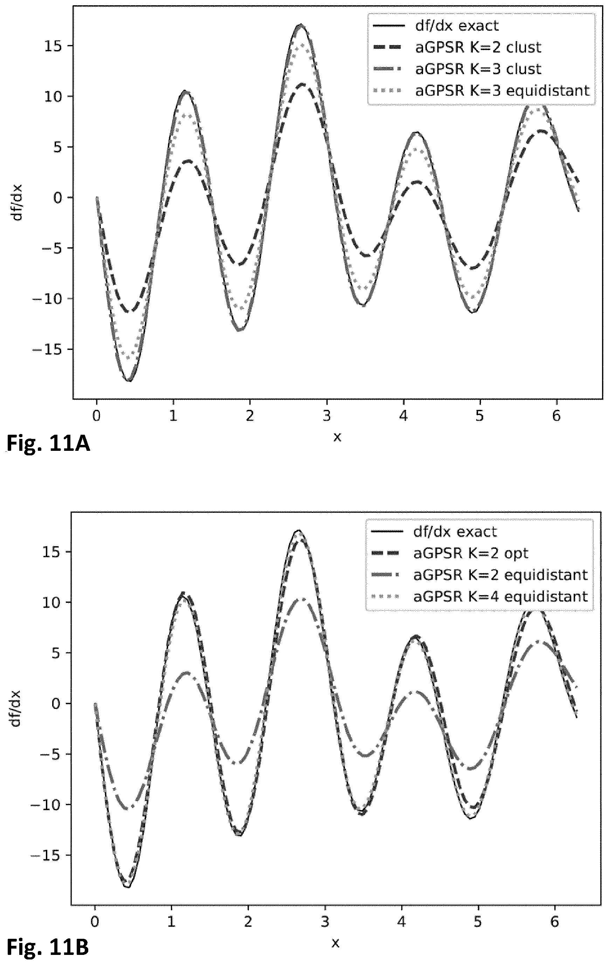

More specific examples are discussed below with reference to **Fig. 10** and **11.**

**Fig. 5A** illustrates various options of determining or receiving parameter shifts. For example, the parameter shifts may be selected from a predetermined range (step **506₂**), e.g., from the range $\left[\frac{\pi}{4}, \frac{\pi}{2}\right]$ or from the range $\left[\frac{\pi}{4}, \frac{3\pi}{4}\right]$. The parameter shifts may be selected, for instance, uniformly or quasi-uniformly from the predetermined range.

Alternatively, the parameter shifts may be selected to minimize the variance (step **506₁**).

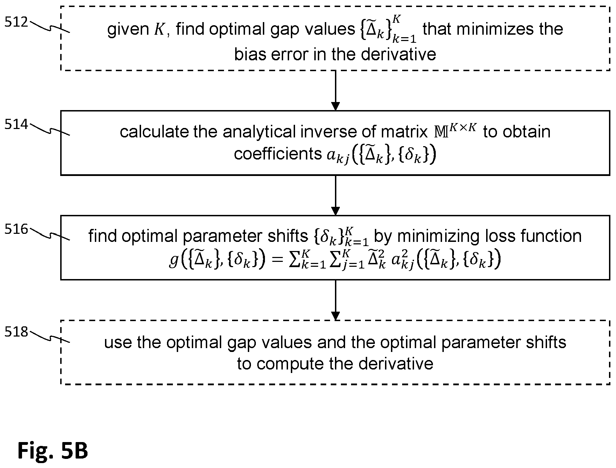

**Fig. 5B** is a flowchart of a method to minimize the variance of the derivative. In particular, **Fig. 5B** is a flowchart of a method to select a set of $K$ parameter shifts $\{\delta_k\}_{k=1}^{K}$ that minimize the variance of a derivative of a quantum circuit computed according to an embodiment, based on a set of $K$ gap values $\{\widetilde{\Delta}_k\}_{k=1}^{K}$.

Application of quantum circuits, including those according to embodiments, on real quantum devices introduces an additional aspect affecting the accuracy of estimated derivatives-the probabilistic nature of quantum mechanical measurement processes used to calculate the expectation value of the cost operator $\hat{C}$, i.e., the function value $f(x)$ as defined in eq. (4). For a finite number of measurements $N_{\text{shots}}$, each measurement results in a random value of $f(x)$ that can be assumed to follow a normal probability distribution characterized by a mean value $\bar{f}(x)$ and a variance $\dfrac{\sigma_0^2(x)}{N_{\text{shots}}}$.

The corresponding derivative $\dfrac{d\bar{f}(x)}{dx}$ depends not only on the number of shots, but also on the number $K$ of equations included in the linear system of eq. (9) and on the chosen shift values $\{\delta_k\}_{k=1}^{K}$, since it depends on the values of shifted functions $f(x \pm \delta_k)$. It turns out that it is possible to minimize the variance of the derivative estimation by selecting optimal shift values $\{\delta_k\}_{k=1}^{K}$.

This can be seen by first considering the full linear equation system of eq. (9) representing exact GPSR, and rewriting the definition of the derivative $\dfrac{\mathrm{d}f(x)}{\mathrm{d}x}$ to emphasize the dependence on shifted function values:

$$\frac{\mathrm{d}f(x)}{\mathrm{d}x} = \sum_{s=1}^{S} \Delta_s \, R_s(F_1, F_2, \ldots, F_S) \qquad (26)$$

In order to calculate the variance $\sigma^2(x)$ of the derivative above, explicit expressions for $R_s(F_1, F_2, \ldots, F_s)$ are needed. Above, the linear system of eq. (9) was solved with Cramer's rule; however, for the current derivation, it is easier to consider matrix-vector equation (10) and to write the solution for $\mathbf{R}^{S \times 1}$ as

$$\mathbf{R}^{S \times 1} = (\mathbb{M}^{S \times S})^{-1} \, \mathbf{F}^{S \times 1}. \qquad (27)$$

This expression makes clear that $R_s(F_1, F_2, \ldots, F_s)$ linearly depends on all the differences $F_s$, so that it can be written in the following way:

$$R_s(F_1, F_2, \ldots, F_S) = \sum_{j=1}^{S} \left(\mathbb{M}^{S \times S}\right)^{-1}_{sj} F_j = \sum_{j=1}^{S} a_{sk} \left( f(x + \delta_k) - f(x - \delta_k) \right) \qquad (28)$$

As pointed out in previous paragraphs, $f(x \pm \delta_k)$ is a stochastic quantity when it is evaluated with some measurement protocol on a real quantum device, and therefore, $R_s(F_1, F_2, \ldots, F_s)$ in eq. (28) can be interpreted as a sum of scaled independent random values. Following Kyriienko *et al.*, it can be assumed that the stochastic values $f(x \pm \delta_k)$ are identically distributed and that the dependence on the argument value is not strong. This implies that their variances are constant: $\sigma_0^2(x) \approx \sigma_0^2$. Thus, the variance of $R_s$, which is a sum of independent and identically distributed (iid) stochastic variables in eq. (28), as a sum of scaled variances of individual stochastic variables:

$$\sigma_s^2 = \frac{2 \, \sigma_0^2}{N_{\text{shots}}} \sum_{j=1}^{S} a_{sj}^2, \qquad (29)$$

The derivative is given by eq. (26), thus using the expression for variance of $R_s$ in eq. (29) we can finally write the variance of the derivative $\sigma_{\mathrm{d}}^2$ in the following way:

$$\sigma_{\mathrm{d}}^2 = \sum_{s=1}^{S} \Delta_s^2 \, \sigma_s^2 = \frac{2 \, \sigma_0^2}{N_{\text{shots}}} \sum_{s=1}^{S} \sum_{j=1}^{S} \Delta_s^2 \, a_{sj}^2 \qquad (30)$$

Since the coefficients $a_{sj}$ are actually components of the inverted matrix $\left(\mathbb{M}^{S \times S}\right)^{-1}$, they are functions of all the spectral gaps $\{\Delta_s\}$ and parameter shifts $\{\delta_s\}$. This means that we can minimize the function

$$g(\{\Delta_s\}, \{\delta_s\}) = \sum_{s=1}^{S} \sum_{j=1}^{S} \Delta_s^2 \, a_{sj}^2(\{\Delta_s\}, \{\delta_s\}) \qquad (31)$$

with respect to the shifts $\{\delta_s\}$ for a given set of spectral gaps $\{\Delta_s\}$, and obtain the optimal set of parameter shift values $\{\delta_s^{\text{opt}}\}$ that results in the smallest variance of the derivative given by eq. (26) when estimated on a real quantum device. This optimization procedure can also be applied with methods according to embodiments, when considering only a part of equations in system of eq. (9). For example, the spectral gaps are chosen as described above with reference to **Fig. 4** or as described below with reference to **Fig. 10** and **11,** e.g., to minimize the error resulting from the truncated equation system. Based on the selected (optionally optimised) gap values, the shift minimization can be performed as described above.

Thus, the procedure of selecting optimal, variance-minimizing parameter shift values according to an embodiment can be summarized in the following way, as shown in **Fig. 5B.**

An optional step **512** comprises finding a set of optimal gap values that minimize $\{\tilde{\Delta}_k\}$ the bias error in the derivative for a given number $K$ of gap values (and hence, included equations in system (9)), for example as described above with reference to **Fig. 4.** Alternatively, a set of gap values selected in a different way may be received.

A step **514** comprises calculating an analytical inverse of the matrix $\mathbb{M}^{K \times K}$ to obtain coefficients $a_{kj}(\{\tilde{\Delta}_k\}, \{\delta_k\})$, where $\mathbb{M}^{K \times K}$ is a $K \times K$ matrix with coefficients $m_{kj} = 4 \sin\left(\frac{\delta_j \tilde{\Delta}_k}{2}\right)$.

A step **516** comprises finding the set of optimal parameter shifts $\{\delta_k\}$ by minimizing a loss function

$$g(\{\tilde{\Delta}_k\}, \{\delta_k\}) = \sum_{k=1}^{K} \sum_{j=1}^{K} \tilde{\Delta}_k^2 \, a_{kj}^2(\{\tilde{\Delta}_k\}, \{\delta_k\})$$

(with respect to parameter shifts $\{\delta_k\}$).

An optional step **518** comprises using the received (possibly optimal) gap values and the optimal parameter shifts to compute the derivative on a real quantum device with minimal variance and, optionally, minimal bias.

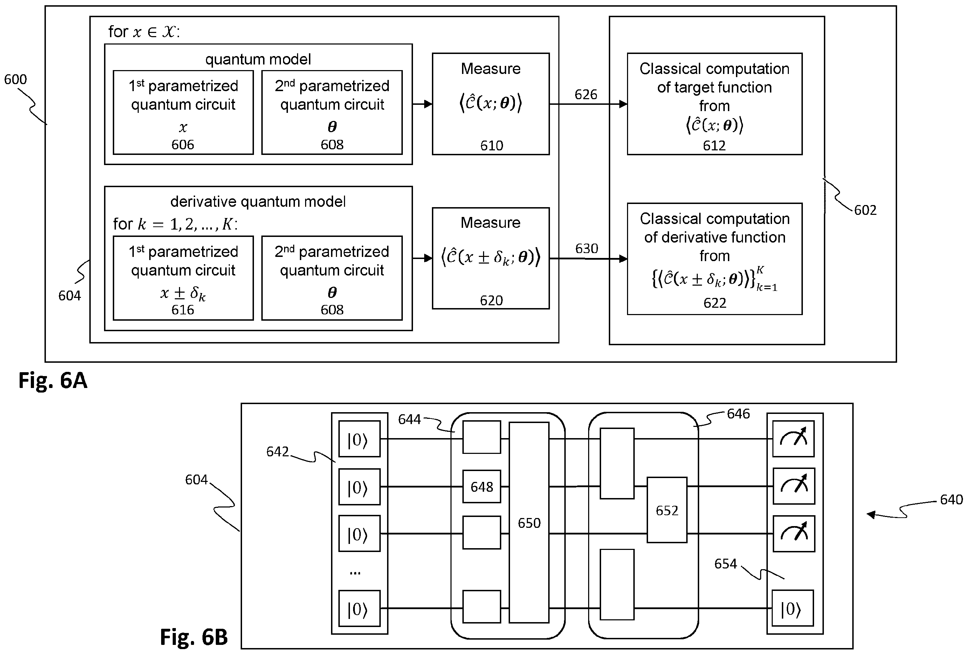

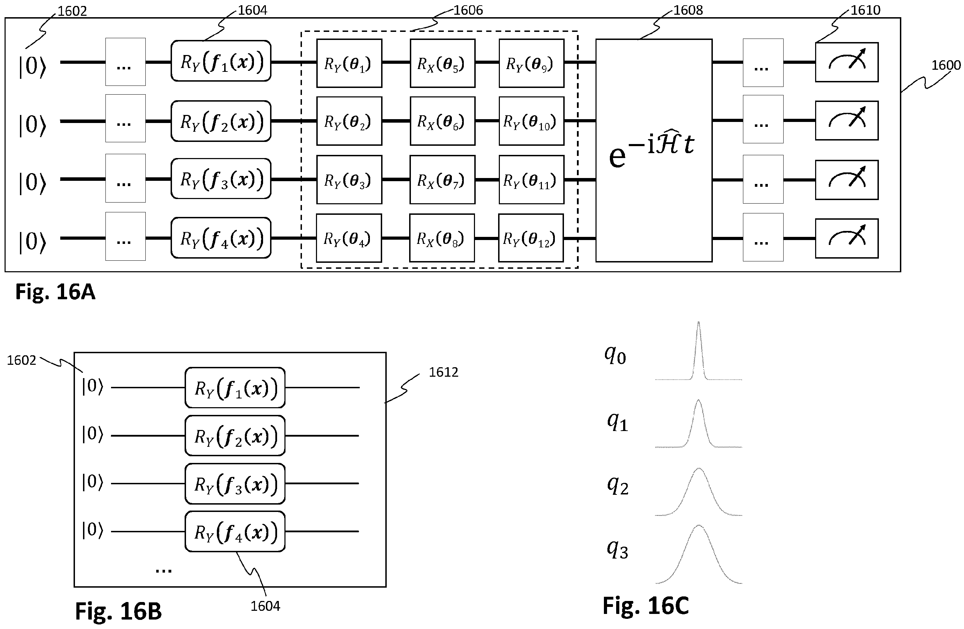

**Fig. 6A** and **6B** schematically depict a method for computing a derivative of a function represented by a quantum circuit according to an embodiment. In particular, **Fig. 6A** shows a high-level schematic of the interplay in a hybrid computer system **600** between a classical computer **602** and a quantum computer **604,** while **Fig. 6B** depicts a schematic of the quantum computer **604.** The quantum computer executes gate sequences called 'quantum circuits' **640,** for example those described below with reference to **Fig. 16A-19.** These quantum circuits typically comprise a qubit initialization step **642,** followed by sequences **644,646** of digital **648,652** and/or analog gates **650.** These gates can be, for example, unitary operations on a quantum state or measurement operations **654.** Examples of hardware-level schematics to implement these quantum circuits are discussed in more detail below with reference to Fig. 15A-E.

In the methods described in this disclosure, these quantum circuits can be used to represent a function and a derivative of that function, represented by a parametric quantum circuit, e.g., a quantum neural network, or a quantum kernel. In the depicted example, gate sequences **606** are used to encode an input parameter $x \in X$ into a Hilbert space associated with the quantum computer. For example, for a quantum computer with $N$ spin-½ qubits, this can be $\mathcal{H} = \mathcal{H}_{s_{1/2}}^{\otimes N}$. In embodiments where $x$ is an independent variable or input variable, gate sequences **606** may be referred to as a quantum feature map circuit. However, in principle there is no difference, insofar as computing a derivative is concerned, with model parameters $\theta$; for clarity, in this disclosure, the parameter with respect to which the derivative is to be computed is generally denoted x, whereas any other parameters that may be used ot parametrize the quantum circuit are denoted by $\theta$. Additionally, e.g., subsequently or concurrently, gate sequences **608** are applied which are parametrised by parameters $\theta$. In the case of a machine learning model, the parameters $\theta$ may be initialised with properly chosen initial values, e.g., random angles and subsequently optimised. Several rounds of applying gate sequences **606,608** and measurement **610** may be required to determine a single expectation value with sufficient accuracy. The measurement may be based on (an expectation value of) a cost function $\hat{\mathcal{C}}$. The result is output data **626.**

The output data **626** are used by the classical computer **602** to compute **612** a function value $f(x)$. The function value may be equal to the computed expectation value, for example, or be based on the output data in a different way; for example, via scaling, translation, or using other mathematical operators. It is noted that in this figure, the computation of the function value $f(x)$ is only shown for the sake of comparison; in general, there is no need to determine the function value in order to determine the derivative function value.

The quantum circuit **616** that is referred to as a derivative quantum circuit, is generally the same quantum circuit as described above to compute the function value, with one difference. Instead of parametrizing the quantum circuit with the parameter $x$, the quantum circuit is parametrized with a shifted value of the parameter to be differentiated, and executed (at least) twice, once with a shift in a positive direction and once with a shift in a negative direction. This is repeated for each of a number $K$ of one or more parameter shifts $\{\delta_k\}_{k=1}^{K}$. Any operations parametrized by other parameters $\theta$, e.g. a second parametrized quantum circuit **608,** remain unchanged. Again, several measurements 620 may be used to obtain an expectation value for each shifted parameter value. The number of circuit repetitions (shots) may the same for the function value and the derivative function value, or different. The result is output data **620.** Based on these output data, the classical computer may determine the value for the derivative function **622.** This value may be used, e.g.,

as input in a loss function, to optimize model parameters (e.g., using gradient descent / ascent), et cetera.

Data representing the measurements **626,630** are transferred to the classical computer **602**. Typically, the data are transferred only once all calculations on the quantum computer are finished. Then, the derivative function value (and optionally the function value) is determined, based on the data received from the quantum computer **604.**

**Fig. 7** is a graph showing an expected accuracy of a method according to an embodiment. In particular, **Fig. 7** shows graphs for the estimated error $Q_K(\Delta)$ on the vertical axis as function of spectral gap $\Delta$ on the horizontal axis, where $Q_K(\Delta)$ is as defined in eq. (25) using equidistant gap values $\tilde{\Delta}_k \approx k$, $k = 1, 2 ..., K$. Graphs are shown for $K = 2$ (graph **702**), $K = 4$ (graph **704**), $K = 8$ (graph **706**), $K = 12$ (graph **708**), and $K = 20$ (graph **710**).

In **Fig. 7,** it can be seen that for all values of linear equation system (11) of size $K$ there is indeed an interval of gap values $\Delta$ where the error function $Q_K$ is small (substantially near zero), i.e., $Q_K \ll 1$, e.g., (depending on $K$) $< 10^{-2}$, $< 10^{-4}$, or $< 10^{-8}$. With larger values of K, the interval where $Q_K \ll 1$ grows. **Fig. 7** was generated using shift parameters valued $\delta_k \in \left[\frac{\pi}{4}, \frac{\pi}{2}\right]$ that are sufficiently large.

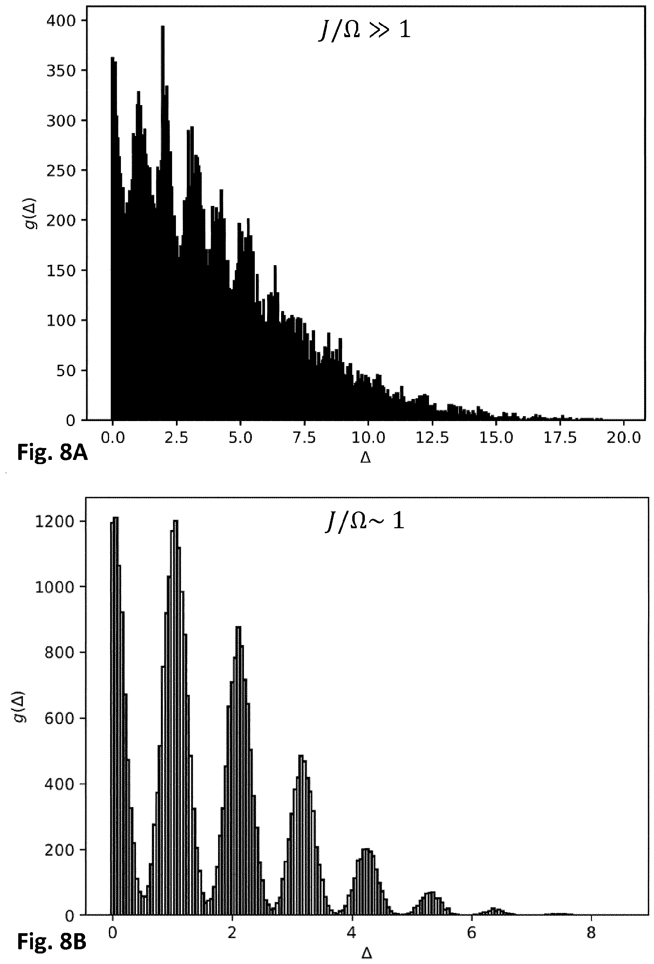

An immediate consequence of the behaviour of $Q_K(\Delta)$ shown in **Fig. 7** is that if some generator $\hat{G}$ produces spectral gaps described by distribution $g(\Delta)$ (mostly) confined to the interval where $Q_K(\Delta) \ll 1$, the estimated derivative will be practically as accurate as when using the full GPSR method with all spectral gaps included in the solution of the linear system of eq. (9). This can be seen in **Figs. 8** and **10**.

**Figs. 8-11** show results for calculating the derivative of function defined in eq. (7) with a typical neutral-atom generator (setting $\hbar = 1$) of $N$ qubits, given by:

$$\hat{G} = \sum_{i=1}^{N}\left(\hat{\sigma}_i^x + \frac{2}{\Omega}\sum_{j=1}^{i-1} J_{ij}\,\hat{n}_i\,\hat{n}_j\right) \qquad (32)$$

In the generator above, fl is the drive amplitude of the laser pulse manipulating the atoms, $J_{ij}$ is the interaction strength between atoms $i$ and $j$, and $\hat{n}_i = \frac{\hat{\sigma}_i^z + \hat{I}_i}{2}$, and $\hat{\sigma}$ is the Pauli operator.

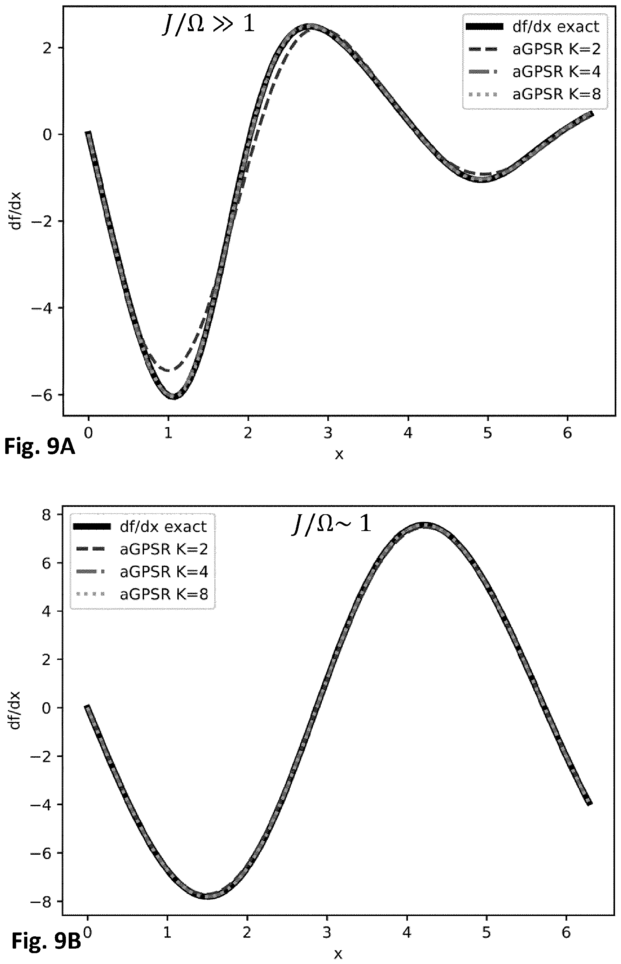

**Fig. 8A** shows a distribution of spectral gaps $g(\Delta)$ for a neutral-atom system generator dominated by inter-atom interaction. In this case, the generator corresponds to a so-called tower feature map. The ratio of the drive amplitude to interaction the strength is $J/\Omega \gg 1$. It can be seen that in this case, most spectral gaps are contained approximately in the interval $T = [0, 8]$. The upper bound may be chosen, e.g., by eye, heuristically, or based on s predefined criterion, e.g., the smallest interval (either with a fixed lower bound, such as 0, or with a variable lower interval) such that a specified fraction of spectral gaps is contained in that interval. Comparing it to the error function plots in **Fig. 7** it is evident that for $K = 4$ and $K = 8$ error values for (most of) the interval $T$ do not exceed $\sim 5 \cdot 10^{-2}$, even for the largest spectral gaps. On the other hand, for $K = 2$, the error starts exceeding $5 \cdot 10^{-2}$ already for much smaller spectral gaps $\sim 2.5$. This translates in poorer estimation of derivative when using $K = 2$ (dashed line) which can be confirmed by the plots in **Fig. 9A.**

**Fig. 9A** shows a computed derivative of a quantum circuit implemented on a (simulated) 8-qubit system with a $2\times4$ qubit layout, for the generator with the spectrum shown in **Fig. 8A.** The parameters of generator $\hat{G}$ were selected such that the external drive amplitude fl is much smaller than the characteristic atom interaction strength $J$, i.e., $J/fl \gg 1$. This way, the dynamics of the system is mainly determined by the always-on interaction between the atoms (qubits). Results are shown for $K = 2$ (dashed line), $K = 4$ (dash-dotted line) and $K = 8$ (dotted line).

**Fig. 8B** shows a distribution of spectral gaps for the same neutral-atom system and the same tower feature map generator, but in the case that the drive amplitude fl is close to or slightly larger than the characteristic interaction strength $J$, i.e., $J/\Omega \sim 1$. It can be seen that the distribution of gaps is mostly confined to interval of roughly $T = [0,4]$ and comparison with error functions in **Fig. 7** shows that already $K = 2$ is sufficient to approximate the derivative well since the error is sufficiently small. This is confirmed by derivative plots in **Fig. 9B** where estimations with all $K$ values practically coincide with the exact derivative. **Fig. 9B** shows results analogous to those shown in **Fig. 9A,** but for the generator with the spectrum shown in **Fig. 8B.**

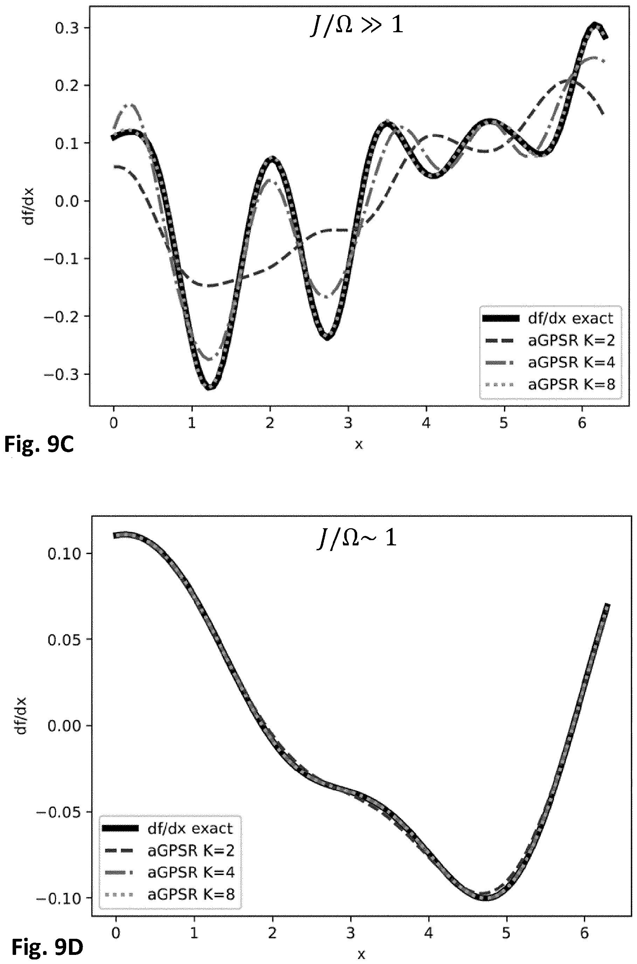

In **Figs. 9A** and **9B,** a function $f(x)$ was calculated using a 0-state in the computational basis of the $N$-qubit system. With a random initial state, the estimated derivatives for different values of $K$ are given in **Figs. 9C** and **9D.**

In particular, **Fig. 9C** shows a comparison of derivatives df/dx computed for different values $K$ with random initial state versus the exact derivative, wherein the ratio of the drive amplitude to interaction the strength is $J/\Omega \gg 1$. **Fig. 9D** shows a comparison of derivatives df/dx computed for different values $K$ with random initial state versus the exact derivative, wherein the ratio of the drive amplitude to interaction the strength is $J/\Omega \sim 1$.

These figures show that in case of a small drive amplitude, the estimation of the derivative is much worse for $K = 2$

(dashed line), relatively acceptable for $K = 4$ (dash-dotted line), and very good for $K = 8$ (dotted line). The deteriorated performance of $K = 2$ and $K = 4$ estimations can be attributed to the fact that since these $K$ values produce quite narrow small-error intervals, they are not sufficient to cover the tail of distribution in **Fig. 8A.** With random initial state $R_s$ values from eq. (8) become different and the tail of spectral gap distribution might become important because modified $R_s$ can increase/decrease the importance of spectral gaps in distribution g($\Delta$), thus effectively changing it. A similar (but much smaller) effect can be observed in **Fig. 9D** where the drive amplitude is large (similar in amplitude to the interaction strength). In this case, the spectral gap distribution is narrower, but still, for $K = 2$, the estimated derivative does not coincide with the exact one perfectly and there is a slight deviation.

A much used feature map in quantum machine learning (QML) is the so-called tower feature map, which is used as a part of the quantum circuit to encode a classical (input) variable. Its generator on neutral-atom devices resembles the one in eq.(32), however now the rotation terms $\hat{\sigma}_i^x$ have distinct prefactors $\beta_i$:

$$\hat{G} = \sum_{i=1}^{N} \left( \beta_i \, \hat{\sigma}_i^x + \frac{2}{\Omega} \sum_{j=1}^{i-1} J_{ij} \, \hat{n}_i \, \hat{n}_j \right) \tag{33}$$

**Fig. 10** shows the distribution of spectral gaps for the same 2×4 arrangement of 8 qubits as was used for **Fig. 8** and **9,** where for qubits with indices $i \leq 4$ the prefactor is $\beta_i = 1$, and for the rest $\beta_i = 2.81$. This distribution shows several prominent clusters of gap values starting with 0.4, 3.0, 5.9, etc. Given that the majority of spectral gaps are found around these peak values and having in mind the structure of the error function in eq. (25), it is evident that using the peak values in algorithms according to embodiments is beneficial since the error terms tend to get smaller.

Derivative estimations with gaps picked from the prominent peaks of distribution are shown in **Fig. 11.** From these results it can be seen that with $K = 3$ when we select gaps corresponding to the peak values of first three clusters, the estimated derivative fits the exact curve very closely. In comparison, also with $K = 3$ but selecting equidistant gaps we see that estimated derivative is not that accurate. With $K = 2$ although gaps are selected corresponding to peak values of first two clusters, the resulting derivative is quite far from the exact result. This demonstrates that when having full information about the spectral gaps of some generator it is beneficial to select the gaps according to the most common ones, thus leading to better accuracy of the derivative in comparison with naive equidistant gap sampling.

The distribution of spectral gaps shown in **Fig. 10A** features several clearly identifiable clusters of spectral gaps. However, as is shown in **Fig. 11,** not all clusters seem to have similar effect on the accuracy of derivative estimation. The following shows how the clusters may be determined that are the most important to and have the biggest influence on the derivative estimation accuracy. To this end, the distribution of spectral gaps is analysed when the interaction term $J$ in eq. (33) has been set to zero. Such distribution is shown in **Fig. 10B.**

**Fig. 10B** shows that the spectral gap distribution reduces to sharp delta function-like peaks. The positions of these peaks approximately correspond to the (broadened) cluster peaks in **Fig. 10A.** This observation suggests that information obtained from the rotation part of the generator (without interaction) is still useful for investigating the distribution of the interacting case. However, in the non-interacting case, there are also quite a few sharp peaks in the distribution and it is not immediately clear which peaks (spectral gaps) are the most important. An initial assumption can be to select gaps corresponding to the highest peaks, i.e., in **Fig. 10B:** ~2, ~3.5 and ~5.6.

In the current example, it is possible to calculate analytically the expression of the function $f(x)$ corresponding to generator in eq. (33) in the non-interacting case. With the given parameters values, the calculated function is a sum of cosine functions with periods defined by spectral gaps $\Delta_1 = 2$ and $\Delta_2 = 5.63$. Thus, only these two gaps are relevant in the non-interacting case. Since with increasing interaction spectral gap peaks begin to broaden and shift to the right, the peaks in **Fig. 10A** corresponding to gap values 2 and 3.5 merge into a single peak with gap value ~3, and the peak corresponding to value 5.63 shifts to around 6. Thus, choosing gap values around 3 and 6 should give an accurate estimation of the derivative, as they correspond to the most important gaps of the spectral distribution.

Results in **Fig. 11B** confirm this assumption. The derivative estimated with $K = 2$ optimal gap values (dashed line) fits the exact result very closely. The result with two equidistant gap values (dash-dotted line) is much worse. To achieve a similar result as the 2 optimal gap values with equidistant gap sampling, $K = 4$ gap values are needed (dotted line). Thus, using information of the non-interacting generator the most important gaps in the interacting case may be selected. This leads to conclusion that even for a large system with a generator that incorporates an interaction term, it is not always necessary to calculate the full spectral distribution. Instead, an informed selection of gap values can be made based on the structure of (only) the non-interacting (here, rotational) part of the generator. This task is usually much easier since the non-interacting generator is often structured and the spectrum can be inferred analytically.

To summarize, increasing the number $K$ of equations in the linear system (11) results in a more accurate estimation of the derivative by reducing the bias error. Compared to the full GPSR method described by Kyriienko *et al.,* the number $K$ of relevant gaps for derivative estimation can be decreased exponentially, especially when considering larger systems with a number of qubits $N > 10$. The behaviour of the error function $Q_K$ defined in eq. (25) provides a theoretical basis for this drastic reduction of relevant spectral gaps. Moreover, there is no need to consider the exact distribution of spectral gaps since uniform sampling with, e.g., step 1 from interval [0, $K$] works well and reduces the error of gap estimation to nearly 0 in a sufficiently large region. Thus, the embodiments described herein allow to compute (estimate) derivatives of functions obtained with systems containing large number of qubits for which calculating all the gaps becomes unfeasible. In the second case when the system size allows calculation of the full spectrum the distribution of gaps can be used to select gap values that correspond to the peak values of the most prominent clusters of gap values. Finally, spectral information obtained from a non-interacting part of the generator may be used to make a smart selection of gaps around the values that are shown to be the most important in the non-interacting case.

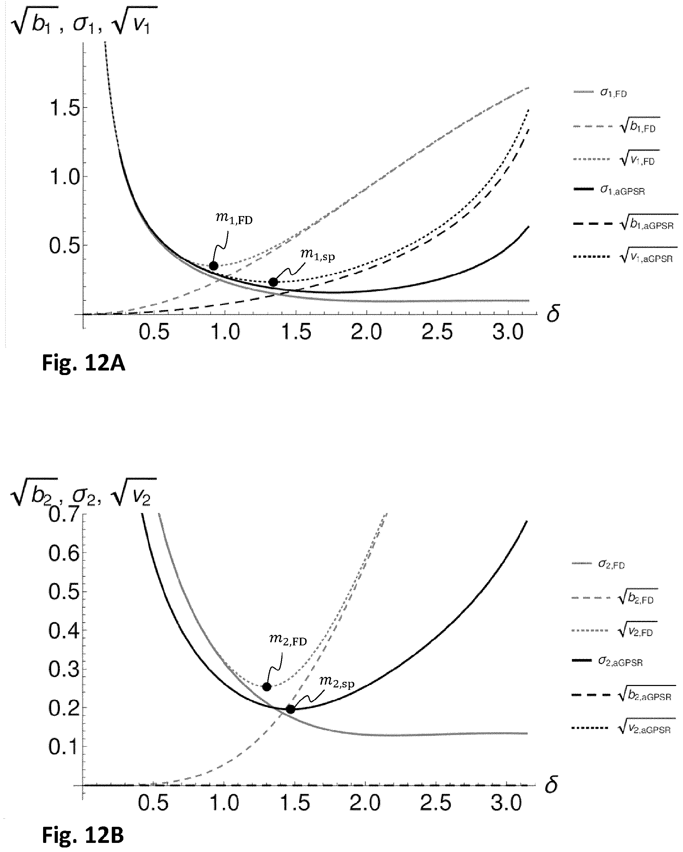

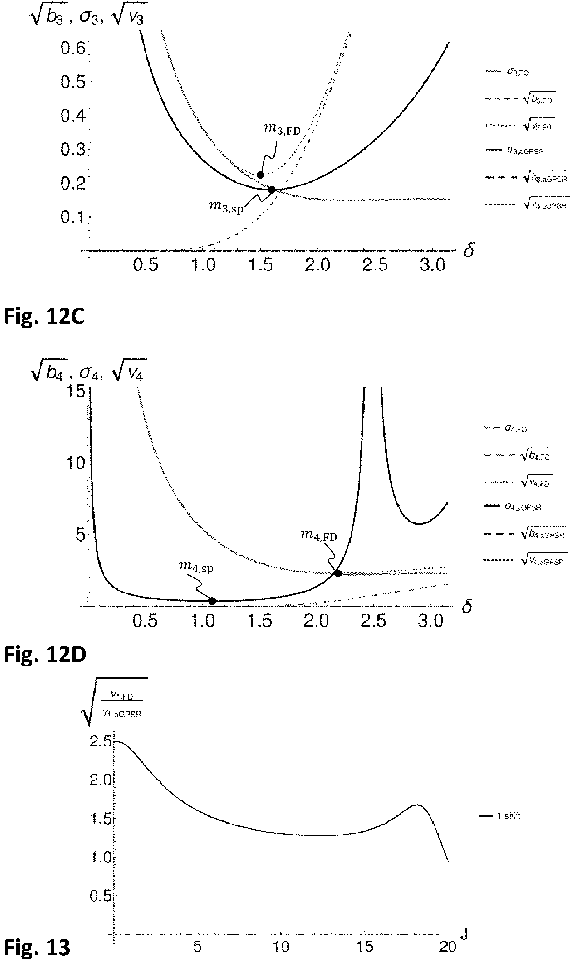

Fig. 12A-D and **Fig. 13** illustrate a comparison between estimation of a function derivative according to an embodiment on the one hand and a Finite Difference (FD) method on the other hand. For this comparison, as an example, a 2-qubit system is considered with a neutral-atom Hamiltonian as a generator that is given by:

$$\hat{G} = \hat{X}_1 \otimes \hat{I}_2 + \hat{I}_1 \otimes \hat{X}_2 + \frac{J}{2\Omega} \hat{Z}_1 \otimes \hat{Z}_2. \tag{34}$$

Here, $J$ represents the interaction strength between the atoms and fl is the amplitude of the laser intensity driving the 2-qubit system. The evolution operator of this system can be written in the following way:

$$\hat{U}(x) = e^{-i\frac{x}{2}\hat{G}}, \tag{35}$$

where the differentiation parameter $x = $ fl $t$ is the rotation angle on the Bloch sphere with $t$ being the duration when laser pulse with amplitude fl is applied to the system.

Using eq. (7), the analytical expression of function $f(x)$ can be written explicitly using the evolution operator in eq. (35) and the total magnetization cost operator $\hat{C} = \hat{Z}_1 \otimes \hat{I}_2 + \hat{I}_1 \otimes \hat{Z}_2$:

$$f(x) = \frac{2J}{\sqrt{J^2 + 16\Omega^2}} \sin\left(\frac{J\,x}{4\Omega}\right) \sin\left(\frac{x\,\sqrt{J^2 + 16\Omega^2}}{4\Omega}\right) + 2\cos\left(\frac{J\,x}{4\Omega}\right) \cos\left(\frac{x\,\sqrt{J^2 + 16\Omega^2}}{4\Omega}\right) \tag{36}$$

The corresponding analytical derivative is given by:

$$\frac{df(x)}{dx} = \frac{2J^2}{4\Omega\,\sqrt{J^2 + 16\Omega^2}} \cos\left(\frac{J\,x}{4\Omega}\right) - 2\frac{\sqrt{J^2 + 16\Omega^2}}{4\Omega} \cos\left(\frac{J\,x}{4\Omega}\right) \sin\left(\frac{x\,\sqrt{J^2 + 16\Omega^2}}{4\Omega}\right) \tag{37}$$

The generator $\hat{G}$ from eq. (34) has 4 eigenvalues:

$$
\begin{aligned}
\lambda_1 &= -\frac{2J}{4\Omega} \\
\lambda_2 &= \frac{2J}{4\Omega} \\
\lambda_3 &= -\frac{2\sqrt{J^2 + 16\Omega^2}}{4\Omega} \\
\lambda_4 &= \frac{2\sqrt{J^2 + 16\Omega^2}}{4\Omega}
\end{aligned}
\tag{38}
$$

and also 4 unique positive spectral gaps:

$$\Delta_1 = \frac{J}{\Omega}$$

$$\Delta_2 = 2\sqrt{\frac{J^2}{16\Omega^2} + 1 - \frac{2J}{4\Omega}}$$

$$\Delta_3 = 2\sqrt{\frac{J^2}{16\Omega^2} + 1 + \frac{2J}{4\Omega}}$$

$$\Delta_4 = 4\sqrt{\frac{J^2}{16\Omega^2} + 1}$$

(39)

In this comparison only a gap value and parameter shift (i.e., a single equation included in the linear system of eq. (9), so $K = 1$) is used for the method according to the embodiment. Using the gap value selection procedure described above, the optimal gap that minimizes the higher order errors is $\Delta_2$ for the present case. Thus, the corresponding expression of the derivative in this case is given by:

$$\left.\frac{df}{dx}\right|_1 (x, \delta) = \Delta_2 \frac{f(x + \delta) - f(x - \delta)}{4 \sin\left(\delta \frac{\Delta_2}{2}\right)}$$

(40)

Since the analytical forms of $f(x)$ and $df(x)/dx$ are known from eqs. (36) and (37), respectively, the bias $b_{1,\text{sp}}$ (labelled here with "sp" for "spectral"; the plots use the label "aGPSR") of the derivative estimation can be explicitly computed as the squared difference between the exact derivative and its approximation. This function depends on both the differentiation parameter $x$ and the parameter shift $\delta$:

$$b_{1,\text{sp}}(x, \delta) = \left(\frac{df(x)}{dx} - \left.\frac{df}{dx}\right|_1 (x, \delta)\right)^2$$

(41)

The derivative approximation in eq. (40) can be treated as a weighted sum of two independent random variables $f(x + \delta)$ and $f(x - \delta)$, and therefore its variance $\sigma_{1,\text{sp}}^2$ is given by:

$$\sigma_{1,\text{sp}}^2(x, \delta) = \Delta_2^2 \frac{\sigma_0^2(x + \delta) + \sigma_0^2(x - \delta)}{16 \, N_{\text{shots}} \sin^2\left(\delta \frac{\Delta_2}{2}\right)}$$

(42)

where the variance $\sigma_0^2$ of the function estimation $f(x)$ can be obtained using expression

$$\sigma_0^2(x) = \langle 0|\hat{U}^\dagger(x) \, \hat{C}^2 \, \hat{U}(x)|0\rangle - f^2(x).$$

(43)

For the FD method of estimating the derivative with a single symmetric shift $\delta$ the bias is given by:

$$b_{1,\text{FD}}(x, \delta) = \left(\frac{df(x)}{dx} - \frac{f(x + \delta) - f(x - \delta)}{2\,\delta}\right)^2$$

(44)

and the variance is given by:

$$\sigma^2_{1,\mathrm{FD}}(x,\delta) = \frac{\sigma^2_0(x+\delta) + \sigma^2_0(x-\delta)}{4\,N_{\mathrm{shots}}\,\delta^2} \tag{45}$$

Based on these expressions, the biases and variances of the derivative estimation resulting from application of the method according to an embodiment (labelled as aGPSR in the plots) and using a finite difference method (labelled with FD in the plots) can be compared. Fig. 12A-D were generated using generator parameter values fl = 10 and $J = 6$, number of measurements $N_{\mathrm{shots}} = 10$, and differentiable parameter $x = 2$. The comparison is given in **Fig. 12A.** This figure shows that for finite differencing, the bias grows more rapidly with increasing shift $\delta$ compared to method according to an embodiment. In both cases, the variance sharply grows when shift approaches 0. The figure also shows that the total squared errors, defined as

$$v_{1,\mathrm{FD}}(x,\delta,\Omega,J) = b_{1,\mathrm{FD}}(x,\delta,\Omega,J) + \sigma^2_{1,\mathrm{FD}}(x,\delta,\Omega,J) \tag{46}$$

and

$$v_{1,\mathrm{sp}}(x,\delta,\Omega,J) = b_{1,\mathrm{sp}}(x,\delta,\Omega,J) + \sigma^2_{1,\mathrm{sp}}(x,\delta,\Omega,J), \tag{47}$$

are convex functions in the given interval of $\delta$ values. Depending on the application, different weights may be associated with the bias and variance. The respective minima $m_{1,\mathrm{FD}}$ and $m_{1,\mathrm{sp}}$ are points that give an optimal trade-off between bias and variance. For current values of $\Omega$ and $J$, the minimal total error for the finite difference method is larger than that of the method according to an embodiment.

The comparison above is limited to methods that use a single (symmetric) parameter shift; however, with such a simple model, the bias error might be too large for certain applications. The bias error may be reduced by increasing the number of parameter shifts. Fig. 12B-D show a comparison using 2, 3 and 4 parameter shifts, respectively, with the respective minima indicated with $m_{k,\mathrm{FD}}$ and $m_{k,\mathrm{sp}}$ for the finite difference and spectral case, respective, with $k = 2, 3\,4$. In the current example, the spectral method with 4 parameter shifts is equivalent to the (full) GPSR as described by Kyriienko *et al.,* as the system under consideration has only 4 distinct (or unique) spectral gaps. Consequently, $\sqrt{b_{4,\mathrm{aGPSR}}} = 0$ (and not visible in the plot), and $\sqrt{v_{4,\mathrm{aGPSR}}} = \sigma_{4,\mathrm{aGPSR}}$ .

The approximate expression of the derivative for the K-shift method according to an embodiment equals, using eq. (14):

$$\left.\frac{\mathrm{d}f(x)}{\mathrm{d}x}\right|_K (x,\{\delta_K\}) = \sum_{k=1}^{K} \widetilde{\Delta}_k \frac{\det(\mathbb{M}^{K\times K}_{(k)})}{\det(\mathbb{M}^{K\times K})} = \sum_{k=1}^{K} \left(f(x+\delta_k) - f(x-\delta_k)\right) r_{K,k} \tag{48}$$

where the second equality uses the fact that the ratio of determinants linearly depends on differences between shifted function values $f(x+\delta_k) - f(x-\delta_k)$. Hence, $r_{K,k}$ is a rational function comprising various combinations of sine functions found in the $\mathbb{M}^{K\times K}$ matrix. It is assumed that the optimal spectral gaps $\{\Delta_K\}$ are used, corresponding to the generator from eq. (34). Using eq. (48), it is straightforward to define the corresponding bias and variance functions for the K-shift method according to an embodiment (aGPSR):

$$b_{K,\mathrm{sp}}(x,\{\delta_K\}) = \left(\frac{\mathrm{d}f(x)}{\mathrm{d}x} - \left.\frac{\mathrm{d}f}{\mathrm{d}x}\right|_K (x,\{\delta_K\})\right)^2 \tag{49}$$

$$\sigma^2_{K,\mathrm{sp}}(x,\{\delta_K\}) = \sum_{k=1}^{K} \frac{\sigma^2_0(x+\delta_k) + \sigma^2_0(x-\delta_k)}{N_{\mathrm{shots}}} r^2_{K,k} \tag{50}$$

Using the expressions in eqs. (49) and (50), the bias and variance expressions for $K$-shift aGPSR and FD methods can be compared, as shown in Fig. 12B-D. For the finite differencing method, equispaced central finite differencing is used as described in B. Fornberg , "Generation of Finite Difference Formulas on Arbitrarily Spaced Grids", Mathematics of Computation 51:184 (1988), pages 699-706,. Here the values for $\Omega$, $J$ and $x$ are the same as in **Fig. 12A** (the 1-shift case). The figures show that the bias error of the method according to an embodiment is essentially 0, thus not contributing to the total squared error. In all cases the minima of the total error are smaller for the aGPSR method compared to the FD method. This suggests that the shift optimization procedure to achieve lowest possible variance in the aGPSR case helps reduce the total squared error.

Investigation of total squared error dependence on shift values reveals that for a particular set of generator parameters this error is minimized and the corresponding minimum in the aGPSR case is smaller than that of FD method. However, for a fuller picture of behaviour of the total error using the aGPSR and FD methods, the dependence of the total error on the interaction strength $J$ may be explored.

**Fig. 13** shows the total error ratio between FD and aGPSR. For the single parameter shift, using the aGPSR method results in a smaller total error of the derivative estimation when compared to single-shift FD approach for a large range of interaction strength values. The graph shows the total error ratio $\sqrt{\dfrac{m_{1,\text{FD}}}{m_{1,\text{sp}}}}$ for parameter values $x = 2$, $\Omega = 10$, and $0 \leq J \leq 20$.

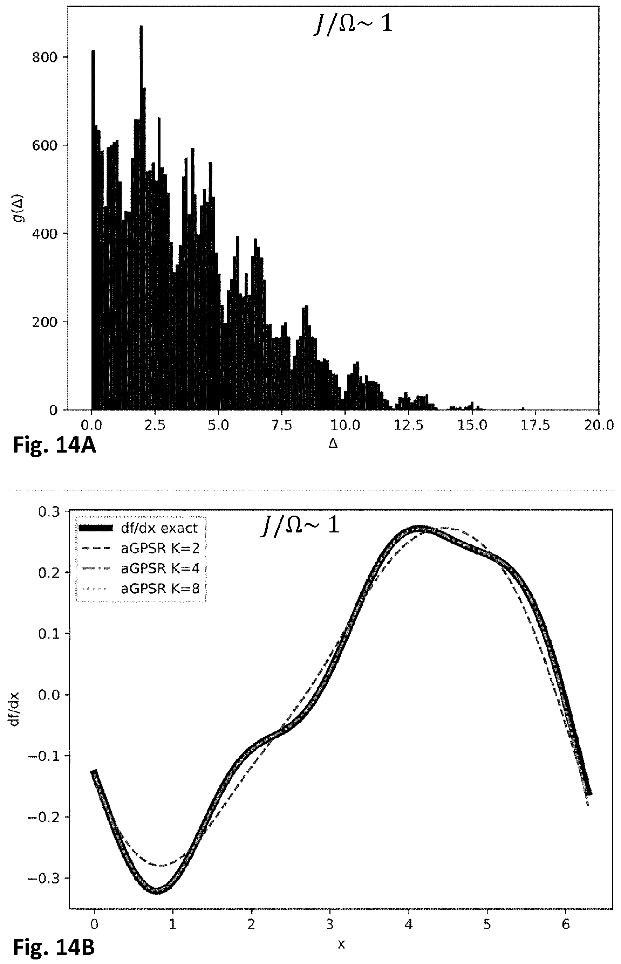

**Fig. 14A** and **14B** show results of a method according to an embodiment for a general 8-qubit system. In particular, **Fig. 14A** shows a distribution of spectral gaps for 8 qubit system with an arbitrary qubit arrangement when J/fl~l. **Fig. 14B** shows a comparison of derivatives d$f$/d$x$ calculated for different values $K$ with 0 initial state vs exact derivative. The ratio of the drive amplitude to interaction strength is $J/\Omega\sim1$.

Calculations of derivatives for different values K when the arrangement of qubits is arbitrary is presented in **Fig. 14B.** The corresponding distribution of spectral gaps is shown in **Fig. 14A.** Good fit of estimated derivative in **Fig. 14B** shows that the underlying arrangement of qubits does not affect the applicability of aGPSR - the increased number K leads to better derivative estimates.

**Fig. 15A** is a hardware-level schematic of the actions effectuating the logical operations shown in circuit diagrams such as **Fig. 1, 6,** and **16-19.** Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1502.** Then, for example a series of single-qubit pulses is sent to the qubit array in 1504, which may apply a single-layer feature map. Additionally, two-qubit pulse sequences can be used to effectively entangle multiple qubits with a feature map **1506.** The duration, type, strength and shape of these pulses determine the effectuated quantum logical operations. **1508** indicates a 'break' in the depicted timeline, which means the sequence of gates may be repeated in a similar fashion in the direction of the time axis **1512.** At the end of the pulse sequences, one or more of the qubits are measured **1510.**

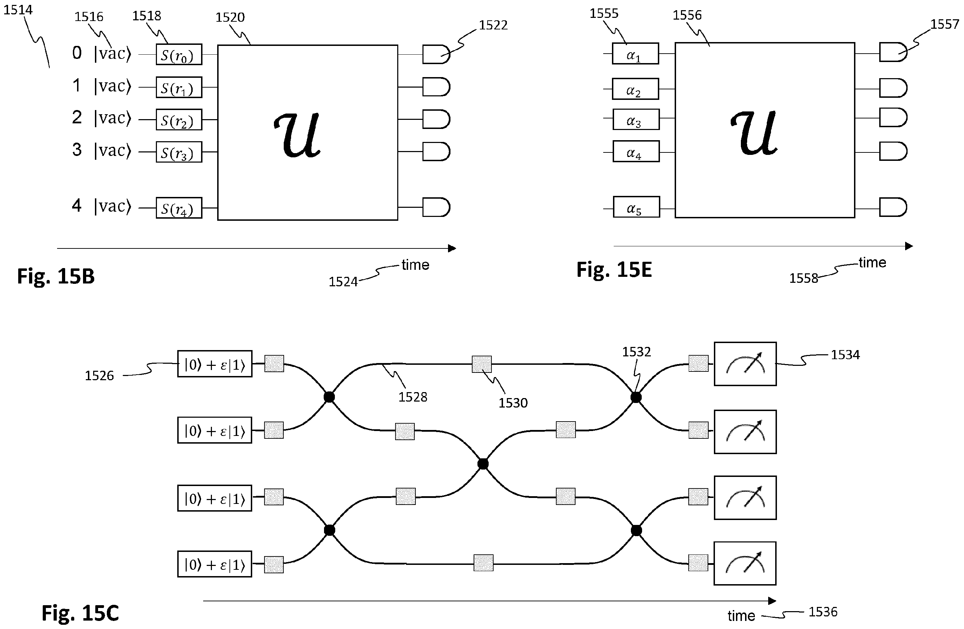

**Fig. 15B** is a hardware-level schematic of the actions effectuating the logical operations shown in circuit diagrams such as **Fig. 1, 6,** and **16-19,** specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1514** are all in the vacuum state **1516,** which are then squeezed to produce single-mode squeezed vacuum states **1518.** The duration, type, strength and shape of controlled-optical gate transformations determine the effectuated quantum logical operations **1520.** At the end of the optical paths, one or more modes are measured with photon-number resolving, Fock basis measurement **1522,** tomography or threshold detectors.

**Fig. 15C** is a hardware-level schematic of the actions effectuating the logical operations shown in circuit diagrams such as **Fig. 1, 6,** and **16-19,** specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1526** are all in a weak coherent state, which is mostly a vacuum state with a chance of one or two photons and negligibly so for higher counts. Subsequently, the photons travel through optical waveguides **1528** through delay lines **1530** and two-mode couplers **1532** which can be tuned with a classical control stack, and which determines the effectuated quantum logical operations.

At the end of the optical paths, one or more modes are measured with photon-number resolving **1534,** or threshold detectors.

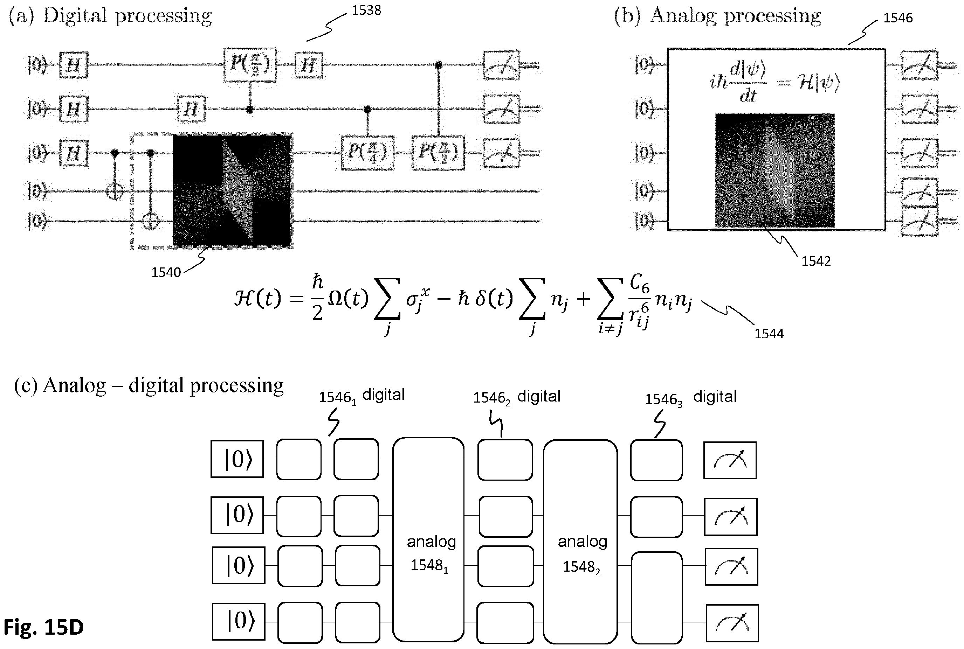

**Fig. 15D** is a hardware-level schematic of the actions effectuating the logical operations shown in circuit diagrams such as **Fig. 1, 6,** and **16-19,** which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 15D** depicts a digital quantum circuit **1538,** wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 15D** depicts an analog mode **1546** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1544** of the atomic array in an analog way. The combined quantum wavefunction evolves according to Schrödinger's equation, and particular, unitary operators $\widehat{\mathcal{U}} = e^{-i\,\widehat{\mathcal{H}}\,t}$, where $\widehat{\mathcal{H}}$ denotes the Hamiltonian and t the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 15D** depicts an example of such digital-analog quantum circuit, including blocks **1546$_{1-3}$** of digital qubit operations (single or multi-qubit) and analog blocks **1548$_{1-3}$**.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

Fig. 15E is a hardware-level schematic of the actions effectuating the logical operations shown in **Fig. 1, 6,** and **16-19,** specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way.

Initially the photons **1555** are in Fock states, weak coherent states or coherent states. The duration, type, strength and shape of controlled-optical gate transformations determine the effectuated quantum logical operations **1556.**

At the end of the optical paths, the modes are measured with photon-number resolving, Fock basis measurement **1557,** tomography or threshold detectors.

The hardware implementation shown in Fig. 15A-15E may also be used to implement the quantum circuits shown in **Fig. 16-19,** as applicable.

**Fig. 16A** depicts a system describing a Digital-Analog implementation of a quantum algorithm. In particular, **Fig. 16A** represents a Digital-Analog implementation where the qubit interactions can be switched on and off and there exists single-qubit addressability for the application of single-qubit gates, a process described in **1600**. In order to transform the internal states of these qubits, a classical control stack may be used to send information to a controller that affects one or more qubits. The controller may send multiple information carriers (e.g., pulses) in time and for each qubit independently. An initialization protocol is used to initialize the qubits, in this example into the $|0\rangle$ state **1602**. The current example shows only four qubits, but the same principles may be extended in a straightforward manner to systems with more (or less) than four qubits.

Then, a quantum feature map is applied **1604** to encode quantum information, e.g., an input variable, into a Hilbert space associated with the quantum processor.

Following application of the feature map, a variational Ansatz is applied, implemented as a variational quantum circuit **1606**. In the current example, the variational Ansatz comprises three single-qubit gates $R_Y$ - $R_X$ - $R_Y$ with different rotational angles $\theta_i$. These single-qubit gates are typically sets of standardized or 'digital' rotations on computational states applied to different qubits with different rotation angles/parameters. These digital gates include any single-qubit rotations according to the $\theta_i$ argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1606**.

Then, the entanglement in this Digital-Analog approach is generated by a wavefunction evolution **1608,** described by the block $e^{-i\,\mathcal{H}\,t}$. During this evolution, the qubits are interacting amongst themselves, letting the system evolve for a specified amount of time. This process produces the necessary entanglement in the system. The combined quantum wavefunction evolves according to Schrödinger's equation, and particular unitary operators $\hat{\mathcal{U}} = e^{-i\,\mathcal{H}\,t}$ in which $\mathcal{H}$ is the Hamiltonian of the system (for example, for neutral atoms the Hamiltonian that governs the system is

$$\mathcal{H} = \sum_{j \neq k} \left( \frac{c_6}{r_j\,k^6} \right) * \hat{n}_j * \hat{n}_k$$

with $\hat{n}$ being the state occupancy of the Rydberg atoms), and t is the evolution time. In this way, a parametric analog unitary block can be applied, which entangles the atoms and can act as a variational Ansatz.

After the evolution of the wavefunction **1608,** another set of single-qubit gates may be applied, similar to the process described in the block of gates $R_Y$ - $R_X$ - $R_Y$ **1606**.

Then, the wavefunction may be evolved once more, and finally a measurement in the computational basis occurs as described in **1610**.

Optionally, additional steps may be included, represented by the ellipses, e.g., before, after, or in between the blocks shown. For example, a different initial state than $|0\rangle$ may be prepared prior to application of the feature map. Furthermore, the blocks can be executed in a different order, for instance, in some embodiments, block **1608** might precede block **1606**. One or more of the blocks **1604-1608,** or variations thereof, may be repeated one or more times prior to the measurement **1610**.

**Fig. 16B** represents a typical quantum feature map **1612** that starts by preparing the quantum register to the $|0\rangle$ quantum state **1602** and then applying single-qubit rotations in all of the qubits with (typically) different rotation angles **1604**. In this example, single qubit rotations **1604** (here chosen as $R_Y(f_i(\boldsymbol{x}))$) act on each qubit individually and are parametrized by a variable $\boldsymbol{x}$. For a non-linear feature map encoding such as the Chebyshev feature map, the variable $\boldsymbol{x}$ may be used as an angle of rotation.

The application **1604** of one rotation operation to each qubit in a register may be referred to as a single layer of rotation operations. This type of encoding of classical information into quantum states is known as angle encoding, which means that a data vector is represented by the angles of a quantum state. Angle encoding can be found in many Quantum Machine Learning algorithms, with the main advantage being that it only requires $n = \log NM$ qubits to encode a dataset of $M$ inputs with $N$ features each. Thus, considering an algorithm that is polynomial in $n$, it has a logarithmic runtime dependency on the data size.

**Fig. 16C** illustrates different pulses (potentially differing in pulse duration and/or amplitude/height) that can be sent to the quantum circuit (different qubits) to encode the classical information. The angle of the rotation that is described by the $f_i(x)$ dictates the duration and geometry of the pulse.

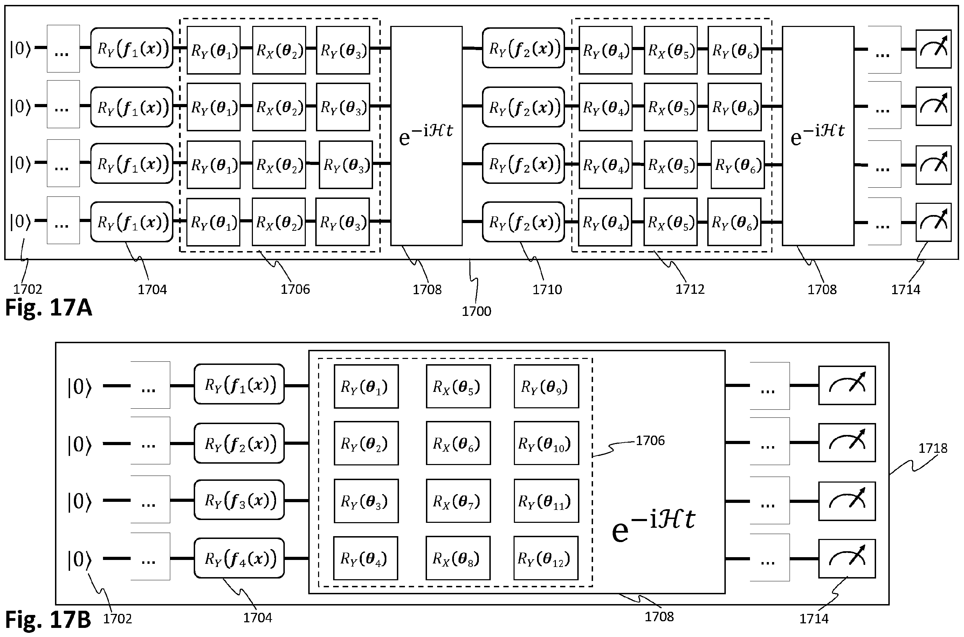

**Fig. 17A** presents a quantum circuit based on a Digital-Analog implementation **1700** that has no single-qubit addressability and uses a wavefunction evolution that can be turned on and off for the entanglement generation. **Fig. 17A** differs from **Fig. 16A** in that it shows a technique known as data re-uploading that alters the quantum feature map **1704** and **1710**. Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1702,** followed by angle encoding that is based on a feature map **1704,** in this case a tower feature map.

Following that, as already explained above with reference to **1606,** three single-qubit gates in series are used to perform a general rotation block that acts as the Ansatz **1706.** In this example the encoding is done through the $\theta_i$ variable of the $R_Y$-$R_X$-$R_Y$ rotations; however, any type of combined rotations of the type ($R_X$, $R_Y$, $R_Z$) could be applied here. Since there is no single-qubit addressability in this example, each $R_Y$ and $R_X$ gate is applied at all qubits simultaneously with the same rotation angle $\theta_i$. Subsequently, the wavefunction is allowed to evolve for a specified amount of time **1708.**

Then the classical data are re-uploaded through angle encoding into single-qubit rotations **1710.** However, each time the (same) data are uploaded, the information is encoded using different angles than in the previous data uploading steps. For example, the amount of rotation may be doubled in each data (re-)uploading step **1704,1710** (i.e., the rotational angle of the might be increasing as 1-2-4, etc.).

Once again, the rotations $R_Y$-$R_X$-$R_Y$ are applied to all qubits simultaneously with the same rotation angle for each single qubit gate, but different than **1706.** The classical information can be repeatedly encoded into the quantum feature map through the data re-uploading technique, while changing the angle of the single qubit rotational angle (**1704, 1710,** etc.) every time after the wavefunction evolution. The resulting quantum feature map can become more expressive as a tower feature map by doing this process of serial data re-uploading with different levels of rotational angles every time the re-uploading is done.

**Fig. 17B** illustrates a different (and at current technology levels more realistic) form of a Digital-Analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1718** starts by encoding information in the $|0\rangle$ quantum state **1702,** followed by a quantum feature map **1704** (analogous to **1604).**

Then, a variational Ansatz is applied, comprising both wavefunction evolution $e^{-i\,\mathcal{H}\,t}$ **1708** and simultaneous application of a block of single-qubit gates **1716** (similar to block **1606**). After multiple repetitions of block **1716,** each time with different rotational angles at the single-qubit gates, the circuit ends with a measurement in the computational basis **1714.**

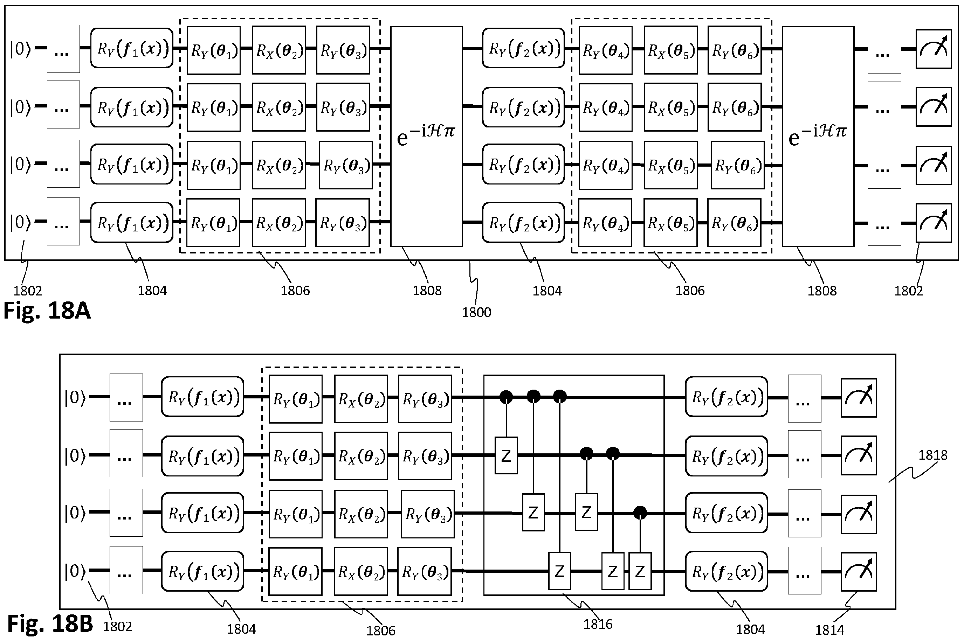

**Fig. 18A** illustrates a quantum circuit **1800** that implements a Digital-Analog implementation with single-qubit addressability, wherein the wavefunction evolution (e.g., atom interactions) can be turned on and off. This quantum circuit is equivalent to the quantum circuit in **Fig. 17A,** with the time of the wavefunction evolution **1808** being t = $\pi$ (in dimensionless coordinates), while all other operations are the same as the ones described in **1700.** The same technique of data re-uploading with a tower feature map **1804, 1810** and the same Ansatz comprising single-qubit gates **1806,1812** followed by wavefunction evolution **1808** are used (all similar to **1700).**

The reason that such a specific time period for the wavefunction evolution **1808** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1808** performs a set of CNOT gates between pairs of qubits included in the quantum circuit. This allows more straightforward comparisons to be drawn between the Digital and Analog implementation of such feature maps, and to evaluate their relative performance.

**Fig. 18B** illustrates a quantum circuit that implements a Digital-Analog implementation with single-qubit addressability **1818,** similar to **1800,** but with the entanglement generated via CZ gates between the qubits, resembling the atom interaction / entanglement generation.

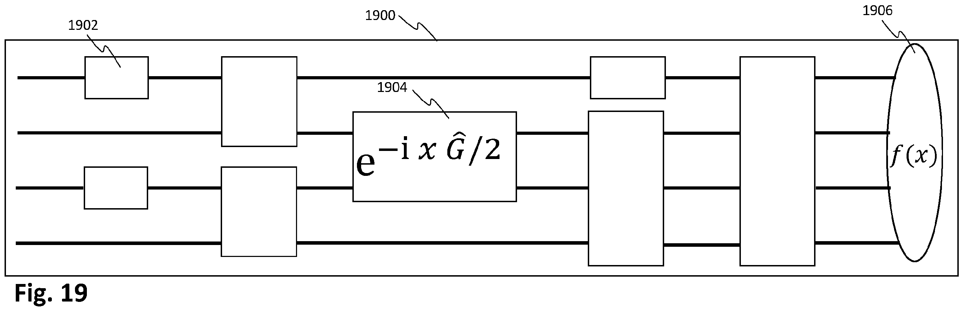

**Fig. 19** presents a workflow for generalized circuit differentiation. In Quantum Machine Learning (QML) algorithms, various quantum feature maps and Parametric Quantum Circuits (PQCs) are typically utilised to express the circuit required to solve a particular problem. These quantum circuits contain tuneable parameters that use a classical optimizer to find the optimal values of the parameters that exist for that formulation. The differentiation required for most parameter optimization methods can be achieved in various ways, with the most common one being the Parameter Shift Rule (PSR).

One way to calculate analytic derivatives of quantum circuits is by measuring overlaps between quantum states.

Analytic derivatives can be used for differentiating unitaries like the one presented in **1904,** e.g., $\widehat{\mathcal{U}} = e^{-ix\hat{G}/2}$ generated by arbitrary Hermitian generator $\hat{G}$. However, in order to have a less resource-intensive method for differentiation, the parameter shift rule (PSR) was proposed. The PSR algorithm can provide analytic gradient estimations through measurement of the expectation values, with gate parameters being shifted to different values. The PSR algorithm is much used to perform differentiation for QML algorithms; however, it is only valid for a specific type of generators, viz.,

generators that are involutory or idempotent. This is because the full analytic derivative only requires 2 measurements of expectation values (2 unique eigenvalues). Although this simplifies the differentiation protocol, it also restricts it to only work for a certain type of generators.

Therefore, as an improvements and generalizations of the PSR algorithm, in **1900** a scheme for a Generalized Parametric Shift Rule (GPSR) algorithm is shown. Such approach allows for differentiating generic quantum circuits with unitaries generated by operators with a rich spectrum (i.e., not limited to idempotent generators). A non-exhaustive list of situations when such generators arise in the implementations shown in **Fig.15-18:** when the parameter controls a multi-qubit gate, when the single-qubit is not perfectly isolated from other qubits due to interaction or when the parameter can only simultaneously control several single qubit gates. The GPSR algorithm is based on spectral decomposition, and showcases the role of the eigenvalue differences (spectral gaps) during differentiation for the generator spectrum. Such approach works for multiple non-degenerate gaps, in contrast to the PSR that is only valid for involutory and idempotent operators with a single unique spectral gap.

A workflow for generalized circuit differentiation can be described as follows: create a quantum circuit that encodes the function $f$ similar to **1900** including single- and multi-qubit gates **1902.** Pick a unitary operator such as $\hat{\mathcal{U}}(x) = \exp(-i\,x\,\hat{G}/2)$ **1904** that is parametrized by some tuneable parameter $x$, and study the spectrum of its generator $\hat{G}$. Then, using unique and positive spectral gaps, a system of equations that includes the spectral information can be created, alongside the calculated parameter shifts, and the measured function expectation values as shifted parameters. The solution of such system can provide the analytical derivative for any general generator $\hat{G}$ and thus perform GPSR. GPSR is described in more detail in Kyriienko et al., 'Generalized quantum circuit differentiation rules', Phys. Rev. A 104 (052417), which is hereby incorporated by reference.

The generalized parameter shift rule provides a method to calculate the exact derivative with respect to parameters represented by an arbitrary generator with a rich spectrum of eigenvalues while remaining robust against noise. However, the generator of a quantum circuit with N qubits will have $2^N$ Eigenvalues, which may all be distinct, which corresponds to making measurements at up to $2^N(2^N - 1)$ different values of the parameter to estimate the derivative at any point. This quickly becomes prohibitively expensive. The embodiments described herein provide methods for computing (approximating) the derivative of a quantum circuit with a limited shot budget, in a system with a non-trivial spectrum of Eigenvalues (i.e., more than two distinct Eigenvalues, but typically hundreds or even thousands). The workflow and the area of applicability remains the same as **1900,** the difference being in the number and selection of the gap values that are used in the calculation.

**Fig. 20A** depicts a system for determining a solution for an computational problem using a hybrid quantum computer system according to an embodiment. The system **2002** may include a quantum computer system **2004** comprising one or more quantum processors **2008,** e.g. a gate-based qubit quantum processor, and a controller system **2010** comprising input output (I/O) devices which form an interface between the quantum processor and the outside world, e.g., the one or more classical processors of a classical computer **2006.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **2012** and an (purely classical information) output **2014.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **2007.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a $N$-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 15C** or any of the other hardware described above with reference to Fig. 15A-E.

In some embodiments, the first data processor system may be implemented as a software program for simulating a quantum computer system **2004** comprising a quantum processor system **2008.** Hence, in that case, the software program may be a classical software program that runs a classical computer **2006** so that quantum algorithms can be developed, executed and tested on a classical computer without requiring access to a hardware implementation of the quantum processor system.

**Fig. 20B** is a block diagram illustrating an exemplary classical data processing system described in this disclosure, for example classical computer **2006.** Classical data processing system **2020** may include at least one processor **2022** coupled to memory elements **2024** through a system bus **2026.** As such, the data processing system may store program code within memory elements **2024.** Further, processor **2022** may execute the program code accessed from memory elements **2024** via system bus **2026.** In one aspect, data processing system may be implemented as a computer that is suitable for storing and/or executing program code. It should be appreciated, however, that data processing system **2020** may be implemented in the form of any system including a processor and memory that is capable of performing the functions described within this specification.

Memory elements **2024** may include one or more physical memory devices such as, for example, local memory **2028** and one or more bulk storage devices **2030.** Local memory may refer to random access memory or other non-persistent memory device(s) generally used during actual execution of the program code. A bulk storage device may be implemented as a hard drive or other persistent data storage device. The classical data processing system **2020** may also include one or more cache memories (not shown) that provide temporary storage of at least some program code in order to reduce the number of times program code must be retrieved from bulk storage device **2030** during execution.

Input/output (I/O) devices depicted as key device **2032** and output device **2034** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **2036** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **2020.**

As pictured in **FIG. 20B,** memory elements **2024** may store an application **2038.** It should be appreciated that classical data processing system **2020** may further execute an operating system (not shown) that can facilitate execution of the application. Application, being implemented in the form of executable program code, can be executed by classical data processing system **2020,** e.g., by processor **2022.** Responsive to executing application, data processing system may be configured to perform one or more operations to be described herein in further detail.

In one aspect, for example, classical data processing system **2020** may represent a client data processing system. In that case, application **2038** may represent a client application that, when executed, configures classical data processing system **2020** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **2038,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the embodiments in the form disclosed. Many modifications and variations will be apparent to those of ordinary skill in the art without departing from the scope and spirit of the invention. The embodiments were chosen and described in order to best explain the principles and the practical application, and to enable others of ordinary skill in the art to understand the various embodiments with various modifications as are suited to the particular use contemplated.

**Claims**

1. A method for computing a derivative of a quantum circuit using a hybrid data processing system, the hybrid data processing system comprising a classical computer system and a quantum computer system, the quantum computer system comprising a plurality of quantum elements, the method comprising:

   determining or receiving, by the classical computer system, a formulation of a parametrized quantum circuit parametrized by a continuous variable in a variable space, the parametrized quantum circuit encoding a given parameter value of the continuous variable in a Hilbert space associated with the plurality of quantum elements;
   determining or receiving, by the classical computer system, a number of one or more distinct gap values, the number of distinct gap values being smaller than a number of spectral gaps obtained from an Eigenvalue spectrum of a generator associated with the parametrized quantum circuit;
   determining or receiving, by the classical computer system, a number of distinct parameter shifts, the number of distinct parameter shifts being equal to the number of one or more distinct gap values;
   executing, by the classical computer system, for each of the one or more distinct parameter shifts, the parametrized quantum circuit with the continuous variable shifted based on the respective parameter shift, the execution comprising:

   - translating the parametrized quantum circuit into control signals for controlling the plurality of quantum elements and for readout of the plurality of quantum elements to obtain hardware measurement data;
   - controlling the quantum computer system based on the control signals; and
   - receiving, in response to the execution of the parametrized quantum circuit, the hardware measurement data; and

   processing the hardware measurement data to obtain the derivative of the parametrized quantum circuit with respect to the given parameter.

2. The method as claimed in claim 1, further comprising determining or receiving, by the classical computer system, spectral information describing the Eigenvalue spectrum;
   wherein the one or more distinct gap values are based on the spectral information.

3. The method as claimed in claim 2, wherein the spectral information comprises at least one of:

   - an exact and/or approximate value of a smallest and a largest positive spectral gap, and/or a smallest and a largest Eigenvalue;
   - a statistical representation of a distribution of positive spectral gaps; and
   - a list of all positive spectral gaps.

4. The method as claimed in any one of the preceding claims, wherein the one or more distinct gap values are obtainable by at least one of:

   - uniform or quasi-uniform sampling in a predetermined range and/or a range defined by the spectral information; and
   - sampling based on the spectral distribution.

5. The method as claimed in claim 2 or 3, wherein the generator is based on a non-interacting part corresponding to a plurality of non-interacting quantum elements and an interacting part based on an interaction of the plurality of quantum elements, wherein a contribution of the interacting part to the spectral gaps of the generator is relatively small compared to a contribution of the non-interacting part, wherein the spectral information comprises information on the Eigenvalue spectrum of the non-interacting part, and wherein the one or more distinct gap values are obtainable by at least one of:

- uniform or quasi-uniform sampling in a range defined by the spectral gaps of the non-interacting part; and
- sampling based on the distribution of positive spectral gaps of the non-interacting part.

6. The method as claimed in any one of the preceding claims, wherein the distinct parameter shifts are obtainable by at least one of:

- selecting the parameter shifts based on the gap values, preferably selecting the parameter shifts such that the variance of the derivative is minimized; and
- selecting, preferably uniformly selecting, the parameter shifts from a predetermined range, preferably from the

range $\left[\frac{\pi}{4}, \frac{3\pi}{4}\right]$, more preferably from the range $\left[\frac{\pi}{4}, \frac{\pi}{2}\right]$.

7. The method as claimed in any one of the preceding claims, wherein obtaining the derivative of the parametrized quantum circuit with respect to the given parameter comprises:

for each of the one or more distinct parameter shifts, determining a difference between the two shifted function values;
solving, based on the determined differences, the one or more distinct gap values and the one or more distinct parameter shifts, a linear system of equations to determine a gap coefficients associated with each spectral gap, preferably solving

$$\left\{ F_k = 4 \sum_{j=1}^{K} \sin\left(\frac{\delta_k \Delta_j}{2}\right) R_j \right\}_{k=1}^{K}$$

where $F_k$ denotes the difference, e.g., a central difference, for the $k^{\text{th}}$ parameter shift $\delta_k$, and $K$ is the number of distinct gap values $\Delta_j$ and distinct parameter shifts $\delta_k$
and computing the derivative based on the one or more distinct spectral gaps and the associated gap coefficients, preferably by computing

$$\partial_x f(x) = \sum_{k=1}^{K} \Delta_k R_k$$

wherein $\partial_x f(x)$ denotes he derivative of the parametrized quantum circuit $f(x)$ with respect to the parameter $x$ parametrizing the parametrized quantum circuit, $R_k$ denotes the gap coefficient associated with gap value $\Delta_k$, and $K$ is the number of distinct gap values $\Delta_k$.

8. The method as claimed in any one of the preceding claims,

wherein executing the parametrized quantum circuit comprises translating the parametrized quantum circuit into a sequence of signals, at least one of the signals being depend on the given parameter, and using the sequence of signals to operate the plurality of quantum elements; and/or,
wherein receiving hardware measurement data comprises applying a read-out signal to the plurality of quantum elements and, in response to the read-out signal, measuring quantum hardware measurement data.

9. The method as claimed in any of the preceding claims, wherein the hybrid quantum computer includes a gate-based qubit device, a digital/analog quantum device, a neutral-atom-based quantum device, an optical qubit device and/or a gaussian boson sampling device.

10. A hybrid data processing system for computing a derivative of a quantum circuit, the hybrid data processing system comprising a classical computer system and a quantum computer system, the classical computer system comprising at least one processor and a memory storing computer-readable instructions, the memory being communicatively coupled to the at least one processor, the quantum computer system comprising a quantum register with a plurality of quantum elements, the at least one processor being configured to, in response to executing the computer-readable instructions:

> determine or receive a formulation of a parametrized quantum circuit parametrized by a continuous variable in a variable space, the parametrized quantum circuit encoding a given parameter value of the continuous variable in a Hilbert space associated with the plurality of quantum elements;
> determine or receive a number of one or more distinct gap values;
> determine or receive a number of distinct parameter shifts, the number of distinct parameter shifts being equal to the number of one or more distinct gap values;
> executing, for each of the one or more distinct parameter shifts, the parametrized quantum circuit with the continuous variable increased by the respective parameter shift and with the continuous variable decreased by the respective parameter shift, the execution comprising:
>
> > - translating the parametrized quantum circuit into control signals for controlling the plurality of quantum elements and for readout of the plurality of quantum elements to obtain hardware measurement data;
> > - controlling the quantum computer system based on the control signals; and
> > - receiving, in response to the execution of the parametrized quantum circuit, the hardware measurement data; and
>
> processing the hardware measurement data to obtain the derivative of the parametrized quantum circuit with respect to the given parameter.

11. The system as claimed in claim 10, configured to execute the method as claimed in any one of claims 1-9.

12. A computer program product or suite of computer program products comprising software code portions which, when run by a hybrid data processing system comprising a classical computer system and a quantum computer system, configure the hybrid data processing system to execute the method steps according to any one of claims 1-9.

13. A non-transient storage medium storing a computer program product according to claim 12.

**Fig. 1A**

**Fig. 1B**

$$f_{\theta}(x) =$$

Fig. 1C

202 — find derivative $\partial_x f(x)$ of a function $f(x)$, where
$$f(x) = \langle \psi | \hat{U}^\dagger(x)\, \hat{C}\, \hat{U}(x) | \psi \rangle$$
with $\hat{U}(x) = \exp\left(-i\frac{x}{2}\hat{G}\right)$, where $\hat{G}$ is a Hermitian generator with more than one distinct Eigenvalue gaps and where $\hat{C}$ is a cost operator and $|\psi\rangle$ is a quantum state (both $x$-independent)

204 — determine or receive information describing the Eigenvalue spectrum of $\hat{G}$

206 — determine or receive $K$ distinct parameter shifts $\{\delta_k\}_{k=1}^{K}$

208 — determine or receive $K$ distinct gap values $\{\widetilde{\Delta}_k\}_{k=1}^{K}$

216 — compute $K$ central differences
$$F_k(x) = f(x + \delta_k) - f(x - \delta_k) \text{ for } k = 1, \dots, K$$

218 — solve linear system of equations for $\{R_j\}_{j=1}^{K}$
$$\left\{ F_k = 4\sum_{j=1}^{K} \sin\left(\frac{\delta_k \Delta_j}{2}\right) R_j \right\}_{k=1}^{K}$$

220 — compute derivative
$$\partial_x f(x) = \sum_{k=1}^{K} \Delta_k R_k$$

210 — receive information defining quantum circuit $f(x)$

212 — receive $K$ distinct parameter shifts $\{\delta_k\}_{k=1}^{K}$

214 — use quantum computer to compute $2K$ shifted values $f(x + \delta_k)$ and $f(x - \delta_k)$ for $k = 1, \dots, K$

(hybrid) quantum computer

classical computer

**Fig. 2**

35

**204** — determine or receive information describing the Eigenvalue spectrum of $\hat{G}$

| smallest and largest non-negative gaps | distribution (e.g., clusters) of non-negative gaps | full spectrum of non-negative gaps |
|---|---|---|

$304_1$ $304_2$ $304_3$

**Fig. 3**

**208** — determine or receive $K$ distinct gap values $\{\widetilde{\Delta}_k\}_{k=1}^{K}$

| uniform sampling in range | based on representation of the distribution | based on spectrum non-interacting system |
|---|---|---|

$408_1$ $408_2$ $408_3$

**Fig. 4**

**206** — determine or receive $K$ distinct parameter shifts $\{\delta_k\}_{k=1}^{K}$

| minimize variance | select $\delta_k \in \left[\frac{\pi}{4}, \frac{\pi}{2}\right]$ |
|---|---|

$506_1$ $506_2$

**Fig. 5A**

512　given $K$, find optimal gap values $\{\widetilde{\Delta}_k\}_{k=1}^{K}$ that minimizes the bias error in the derivative

514　calculate the analytical inverse of matrix $\mathbb{M}^{K \times K}$ to obtain coefficients $a_{kj}(\{\widetilde{\Delta}_k\}, \{\delta_k\})$

516　find optimal parameter shifts $\{\delta_k\}_{k=1}^{K}$ by minimizing loss function
$$g(\{\widetilde{\Delta}_k\}, \{\delta_k\}) = \sum_{k=1}^{K} \sum_{j=1}^{K} \widetilde{\Delta}_k^2 \, a_{kj}^2(\{\widetilde{\Delta}_k\}, \{\delta_k\})$$

518　use the optimal gap values and the optimal parameter shifts to compute the derivative

**Fig. 5B**

for $x \in \mathcal{X}$:

**quantum model**

| 1st parametrized quantum circuit $x$ 606 | 2nd parametrized quantum circuit $\boldsymbol{\theta}$ 608 |

$\longrightarrow$ Measure $\langle \hat{\mathcal{C}}(x; \boldsymbol{\theta}) \rangle$ 610

626 $\longrightarrow$ Classical computation of target function from $\langle \hat{\mathcal{C}}(x; \boldsymbol{\theta}) \rangle$ 612

**derivative quantum model**
for $k = 1, 2, \ldots, K$:

| 1st parametrized quantum circuit $x \pm \delta_k$ 616 | 2nd parametrized quantum circuit $\boldsymbol{\theta}$ 608 |

$\longrightarrow$ Measure $\langle \hat{\mathcal{C}}(x \pm \delta_k; \boldsymbol{\theta}) \rangle$ 620

630 $\longrightarrow$ Classical computation of derivative function from $\left\{ \langle \hat{\mathcal{C}}(x \pm \delta_k; \boldsymbol{\theta}) \rangle \right\}_{k=1}^{K}$ 622

600

604

602

**Fig. 6A**

$|0\rangle$
$|0\rangle$
$|0\rangle$
$\ldots$
$|0\rangle$

642  644  648  650  652  646

654

$|0\rangle$

640

604

**Fig. 6B**

38

**Fig. 7**

**Fig. 8A**

**Fig. 8B**

**Fig. 9A**

**Fig. 9B**

Fig. 9C

Fig. 9D

$$J/\Omega \gg 1$$

**Fig. 10A**

$$J/\Omega = 0$$

**Fig. 10B**

Fig. 11A

Fig. 11B

Fig. 12A

Fig. 12B

Fig. 12C

Fig. 12D

Fig. 13

**Fig. 14A**

**Fig. 14B**

Fig. 15A

Fig. 15E

Fig. 15B

Fig. 15C

(a) Digital processing 1538

1540

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

1544

(b) Analog processing 1546

$$i\hbar\frac{d|\psi\rangle}{dt} = \mathcal{H}|\psi\rangle$$

1542

(c) Analog – digital processing

$1546_1$ digital    $1546_2$ digital    $1546_3$ digital

analog $1548_1$    analog $1548_2$

Fig. 15D

Fig. 16A

Fig. 16B

Fig. 16C

**Fig. 17A**

**Fig. 17B**

**Fig. 18A**

**Fig. 18B**

Fig. 19

**Fig. 20A**

**Fig. 20B**

Europäisches
Patentamt

European
Patent Office

Office européen
des brevets

# EUROPEAN SEARCH REPORT

**Application Number**

EP 23 22 0077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/101483 A1 (QU & CO R&D B V [NL]) 19 May 2022 (2022-05-19) * abstract; claims 1-19; figures 1-17 * * page 2, line 34 - page 62, line 2 * | 1-13 | INV. G06N10/20 G06N10/60 ADD. G06N10/40 |
| L | KYRIIENKO OLEKSANDR ET AL: "Generalized quantum circuit differentiation rules", PHYSICAL REVIEW A, vol. 104, no. 5, 15 November 2021 (2021-11-15), page 52417, XP055980312, ISSN: 2469-9926, DOI: 10.1103/PhysRevA.104.052417 * pages 52417-1 - pages 52417-10, paragraph 1 * | 1-13 | |
| A | O'BRIEN ET AL: "Calculating energy derivatives for quantum chemistry on a quantum computer", ARXIV.ORG, CORNELL UNIVERSITY LIBRARY, 201 OLIN LIBRARY CORNELL UNIVERSITY ITHACA, NY 14853, 9 May 2019 (2019-05-09), XP081370924, * page 1 - page 14, right-hand column, paragraph 2 * * Appendices A-E * | 1-13 | |
| A | WO 2023/213821 A1 (QU&CO R&D B V [NL]) 9 November 2023 (2023-11-09) * the whole document * | 1-13 | |

| | | | | TECHNICAL FIELDS SEARCHED (IPC) |
| | | | | G06N |

The present search report has been drawn up for all claims

| Place of search | Date of completion of the search | Examiner |
|---|---|---|
| The Hague | 10 June 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0077

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | Publication date | Patent family member(s) | Publication date |
|---|---|---|---|
| WO 2022101483 A1 | 19-05-2022 | AU 2021379092 A1 | 29-06-2023 |
| | | CA 3201802 A1 | 19-05-2022 |
| | | EP 4244779 A1 | 20-09-2023 |
| | | JP 2023550066 A | 30-11-2023 |
| | | KR 20230113327 A | 28-07-2023 |
| | | US 2023418896 A1 | 28-12-2023 |
| | | WO 2022101483 A1 | 19-05-2022 |
| WO 2023213821 A1 | 09-11-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KYRIIENKO et al.** Generalized quantum circuit differentiation rules. *Phys. Rev. A*, vol. 104, 052417

- **B. FORNBERG**. Generation of Finite Difference Formulas on Arbitrarily Spaced Grids. *Mathematics of Computation*, 1988, vol. 51 (184), 699-706